(19) Europäisches Patentamt

European Patent Office

Office européen des brevets

(11) Numéro de publication : **0 346 164 B1**

(12) **FASCICULE DE BREVET EUROPEEN**

(45) Date de publication du fascicule du brevet :
**02.12.92 Bulletin 92/49**

(51) Int. Cl.$^5$ : **H04L 12/28, H04L 12/58**

(21) Numéro de dépôt : **89400990.1**

(22) Date de dépôt : **11.04.89**

(54) **Procédé d'acheminement pour réseaux à commutation de paquets.**

(30) Priorité : **20.04.88 FR 8805236**

(43) Date de publication de la demande :
**13.12.89 Bulletin 89/50**

(45) Mention de la délivrance du brevet :
**02.12.92 Bulletin 92/49**

(84) Etats contractants désignés :
**CH DE ES GB IT LI NL SE**

(56) Documents cités :
**FR-A- 2 515 904**
**FR-A- 2 575 881**
**PATENT ABSTRACTS OF JAPAN, vol. 8, no.
217 (E-270)[1654], 4 octobre 1984, page 55 E
270; JP-A-59 100 652**
**IBM TECHNICAL DISCLOSURE BULLETIN,
vol. 22, no. 8A, janvier 1980, pages 3460-3464,
New York, US; K.C. CHU: "Distributedprotocol
for updating network topology information"**

(73) Titulaire : **FRANCE TELECOM**
**6, Place d'Alleray**
**F-75015 Paris (FR)**

(72) Inventeur : **Servel, Michel**
**Le Rhu en Servel**
**F-22300 Lannion (FR)**
Inventeur : **Quinquis, Jean-Paul**
**Rue de Cornic**
**F-22700 Perros-Guirec (FR)**
Inventeur : **Lespagnol, Albert**
**33 Rue de Landerval**
**F-22700 Perros-Guirec (FR)**

(74) Mandataire : **Cabinet Martinet & Lapoux**
**BP 405**
**F-78055 Saint Quentin en Yvelines Cédex (FR)**

EP 0 346 164 B1

**Description**

La présente invention concerne de manière générale la commutation de paquets. Plus particulièrement, l'invention concerne un procédé d'acheminement et des réseaux de commutation de paquets asynchrones et éventuellement synchrones.

La commutation temporelle asynchrone de paquets est la technique de commutation connue la plus apte à répondre aux différentes contraintes qui pèsent sur les futurs réseaux numériques à intégration de services à large bande (RNIS-LB), notamment des contraintes d'adaptabilité, de souplesse et d'évolutivité. Cette technique autorise une auto-adaptation du réseau et permet d'écouter n'importe quel débit de source, ce qui est un avantage décisif compte tenu de la grande variété de sources de natures et de performances différentes qui doivent être raccordables à un réseau à large bande. Toutefois, la commutation temporelle asynchrone demande aux commutateurs des performances accrues, notamment des temps de commutation extrêmement brefs afin de compenser des retards introduits par des files tampons et d'écouler des hauts débits. Pour atteindre des faibles temps de commutation, les commutateurs doivent être de conception la plus simple possible. Compte tenu des techniques actuelles d'intégration de circuits, il est possible à des coûts raisonnables de doter les différents terminaux raccordables au réseau d'un niveau d'"'intelligence" élevé. Une solution pour simplifier les traitements effectués par les commutateurs consisterait à charger ces terminaux intelligents de la responsabilité du choix des routes d'acheminement des paquets à travers le réseau. Les algorithmes de traitement implantés dans les commutateurs se réduisent alors à leurs plus simples expressions. L'utilisation de mémoires pour supporter des tables de traduction telles que comprises dans la plupart des commutateurs connus est évitée et les circuits de commande dans les commutateurs sont réalisables à l'aide de quelques circuits intégrés en logique rapide.

Par ailleurs, les installations d'usager pour le raccordement des terminaux au réseau à large bande posent également des problèmes. Des installations de différentes importances sont à envisager, de l'installation minimale pour un particulier au réseau local d'entreprise.

Il est souhaitable que l'installation pour un particulier appelée "régie d'abonné" soit extensible, de la simple prise de raccordement pour un unique terminal au véritable mini-réseau commuté autorisant des communications internes entre terminaux. Ces mini-réseaux doivent rester à un niveau de coût accessible et être simples d'usage. L'homogénéité des différentes régies entre elles est une condition importante pour garantir un faible coût, la simplicité d'usage et l'extensibilité des régies. Les supports de transmission, les prises de raccordement, les techniques de commutation utilisés doivent être les mêmes dans les différentes régies. Les prises de raccordement doivent de préférence être banalisées, c'est-à-dire être aptes à raccorder tout type de terminal. L'usager peut ainsi changer l'implantation de ses terminaux sans pour autant modifier l'installation. Des structures à bus distribué et en anneau ou chaîne à commutation répartie ont été proposées pour ces installations notamment pour minimiser les câblages nécessaires.

De même, un réseau local d'entreprise doit offrir des garanties d'extensibilité et de portabilité des terminaux. L'homogénéité est également une condition importante pour de telles installations. De plus, il est souhaitable qu'un réseau local d'entreprise offre la possibilité de localiser un terminal quelconque raccordé au réseau, et donc la possibilité de localiser la personne à laquelle il est généralement attribué de manière spécifique.

Le document FR-A-2 575 881 concerne un procédé d'échange de messages dans un réseau en anneau entre une station émettrice et plusieurs stations du réseau, auxquelles un message contenu dans une trame est susceptible d'être adressé, le procédé comportant la modification de l'information continue dans un champ vide au passage dans chaque station.

La présente invention vise essentiellement à fournir un procédé d'acheminement de paquets pour être mis en oeuvre notamment dans un réseau de commutation temporel asynchrone de paquets et mettant à contribution les terminaux raccordés pour le choix des routes d'acheminement des paquets afin de réduire la complexité des commutateurs inclus dans ce réseau, d'accroître leurs performances, et par ailleurs d'autoriser une extension facile du réseau.

A cette fin, le procédé selon l'invention pour acheminer des paquets est tel que défini par la revendication 1.

Le procédé selon l'invention est plus particulièrement conçu pour tout réseau ou partie de réseau à structure arborescente ou en chaîne , ces structures présentant des artères ou branches de transmission de paquets à haut débit constituant des directions de transmission privilégiées. Au niveau d'un commutateur dans l'artère, deux possibilités de commutation d'un paquet de données sont possibles, dans le sens de la direction privilégiée ou vers un multiplex en dérivation. Le paquet de données est transmis selon la direction privilégiée tant que le mot de distance correspondant inclus dans le paquet n'atteint pas une valeur nulle. Lorsqu' au niveau d'un commutateur le mot de distance prend une valeur nulle, ledit commutateur est informé que le paquet doit changer de direction et il commute donc le paquet vers le multiplex en dérivation.

Un second objectif de l'invention est de fournir des réseaux de commutation mettant en oeuvre le procédé selon l'invention et désignés pour des installations d'usager et réseaux locaux d'entreprise dans le cadre des futurs réseaux à large bande.

A cette fin, un premier réseau de commutation temporel à structure en chaîne pour la mise en oeuvre du procédé selon l'invention est tel que défini par la revendication 2.

Ce premier réseau est adapté pour constituer une régie d'abonné.

Un second réseau de commutation temporel selon l'invention à structure en chaîne-étoile est tel que défini par la revendication 6.

D'autres avantages et caractéristiques des procédé et réseaux de commutation selon l'invention apparaîtront à la lecture de la description suivante de plusieurs réalisations préférées du procédé et réseaux selon l'invention en référence aux dessins annexés correspondants, dans lesquels :

- la Fig. 1 montre une première réalisation préférée d'un réseau de commutation temporel de paquets selon l'invention sous la forme d'une régie d'abonné de structure en chaîne ;

- les Figs. 2 et 3 montrent respectivement des paquets d'appel et des paquets de données transmis dans la régie d'abonné montrée à la Fig. 1 ;

- la Fig. 4 est un bloc-diagramme détaillé d'un noeud de commutation constituant l'élément de commutation de base pour la réalisation de la régie d'abonné et de sous-réseaux en chaîne inclus dans une seconde réalisation préférée montrée à la Fig. 6 ;

- la Fig. 5 est une table de vérité montrant le fonctionnement d'un circuit de logique d'aiguillage en phase d'appel compris dans un noeud de commutation de la régie d'abonné ;

- la Fig. 6 montre une seconde réalisation préférée d'un réseau de commutation temporel de paquets selon l'invention sous la forme d'un réseau local d'entreprise de structure en chaîne-étoile ;

- les Figs. 7 et 8 montrent respectivement des paquets d'appel et des paquets de données transmis dans le réseau local d'entreprise montré à la Fig. 6 ;

- la Fig. 9 montre différents parcours effectués par un paquet d'appel transmis par un terminal demandeur et diffusé dans le réseau local d'entreprise vers tous les autres terminaux raccordés ;

- les Figs. 10 et 11 sont deux tables de vérité montrant le fonctionnement de premier et second circuits de logique d'aiguillage en phase d'appel compris dans des premier et second noeuds de commutation du réseau local d'entreprise, respectivement, le premier noeud n'étant pas relié à un commutateur central du réseau local et le second noeud étant relié à un commutateur central du réseau local ; et

- la Fig. 12 est un bloc-diagramme détaillé de deux commutateurs centraux compris dans le réseau local d'entreprise.

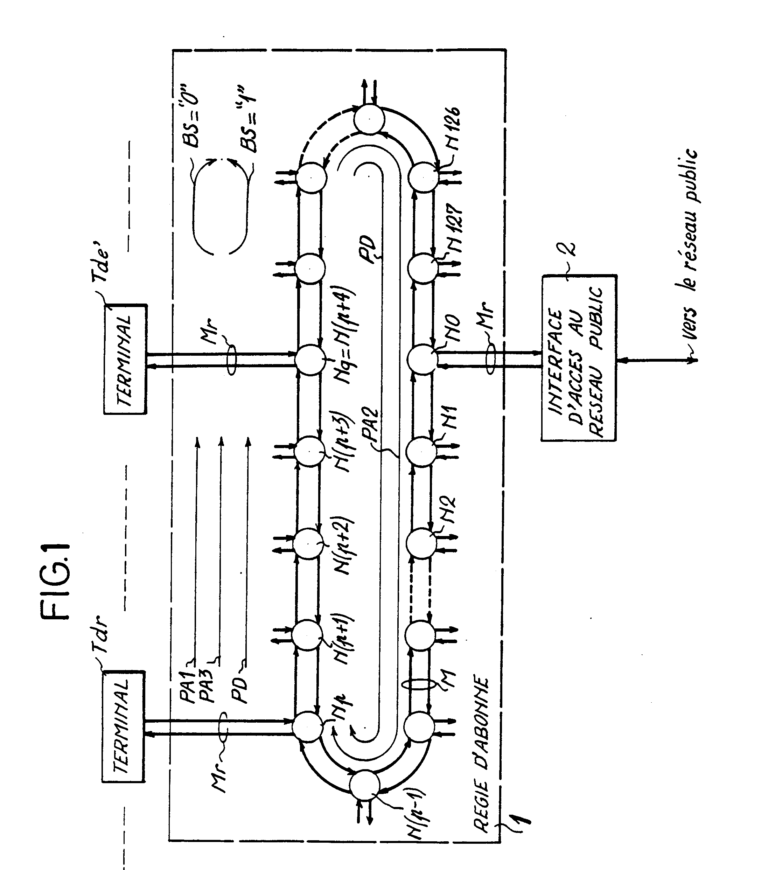

Une première réalisation préférée d'un réseau selon l'invention montrée à la Fig. 1 est une régie d'abonné 1 de type en chaîne reliée à un réseau numérique de télécommunications public par exemple de type à commutation temporelle asynchrone de paquets.

La régie d'abonné 1 est constituée par une pluralité de I = 128 noeuds de commutation analogues au maximum, N0 à N127, connectés en chaîne par des multiplex bidirectionnels M. Un noeud quelconque de la régie 1, par exemple N0, est relié par un multiplex de raccordement Mr à une interface d'accès au réseau public 2, telle qu'une interface T normalisée par le Comité Européen de Normalisation Electronique (CENELEC) pour les installations d'usager dans un RNIS-LB. Les I-1=127 noeuds restants N1 à N127 connectent à la régie 1 des terminaux de l'installation d'abonné. Néanmoins, un ou plusieurs noeuds parmi les noeuds N1 à N127 peuvent être reliés à un autre chaîne pour former une régie d'abonné à deux chaînes de capacité accrue. Les terminaux sont équipés chacun d'une interface adaptée telle qu'une interface universelle S de raccordement de terminal en cours de normalisation par le Comité Européen de Normalisation Electronique (CENELEC) pour les installations d'usager dans un RNIS-LB. Les terminaux sont reliés respectivement à des noeuds correspondants de la régie 1 par des multiplex de raccordement Mr. A chaque terminal est attribué un numéro d'identification NI. De même, à l'interface d'accès 2 est également attribué un numéro d'identification NI.

Considérons deux terminaux Tdr et Tdé de l'installation d'abonné ayant à communiquer entre eux et reliés respectivement à des noeuds $N_p$ et $N_q$ de la régie 1. Le terme terminal est utilisé ici dans un sens très large pour tout équipement connecté à un noeud de la chaîne à travers un multiplex de raccordement, terminal à proprement parler, interface d'accès au réseau public ou un noeud d'une autre chaîne de la régie. Préalablement à la communication pendant laquelle les terminaux Tdr et Tdé transmettent des paquets de données, a lieu une phase d'établissement de la communication ou phase d'appel pendant laquelle les terminaux Tdr et Tdé se transmettent mutuellement des paquets d'appel PA afin de déterminer et d'échanger toutes les coordonnées nécessaires à la communication.

De manière générale, dans la régie 1 ainsi que dans une seconde réalisation préférée de l'invention décrite postérieurement, un terminal transmettant un paquet d'appel PA ou de données PD détermine le sens de transmission du paquet dans la chaîne en positionnant dans le paquet un bit de sens BS.

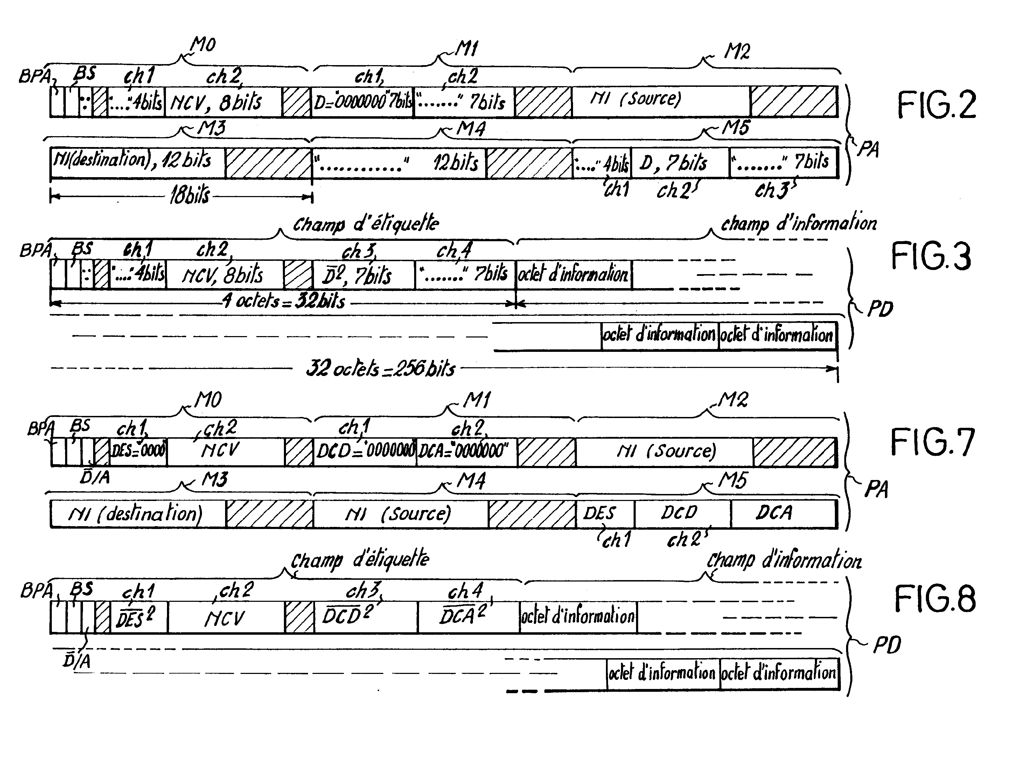

Pendant la phase d'appel, trois paquets d'appels PA1, PA2 et PA3 sont transmis entre le terminal demandeur Tdr et le terminal demandé Tdé. Les paquets PA1 et PA3 sont transmis par le terminal Tdr vers le terminal Tdé. Le paquet PA2 est transmis par le terminal Tdé vers le terminal Tdr. Tous les paquets d'appels PA ont une structure analogue montrée à la Fig. 2. La structure montrée n'est pas une structure spécifiquement adaptée à la régie 1 ; c'est une structure plus générale qui convient également pour des réalisations plus complexes du réseau selon l'invention, notamment pour une seconde réalisation préférée décrite ultérieurement. D'autres structures de paquets d'appel sont bien entendu possibles.

En référence à la Fig. 2, un paquet d'appels PA est composé de trente six octets, dont seuls les six premiers mots de 18 bits MO à M5 sont significatifs. Sur la Fig. 2, on n'a représenté que les mots MO à M5 du paquet d'appel. Le mot M0 comprend en en-tête 2 bits de signalisation, BPA et BS, et un emplacement vide non utilisé pour la régie 1 et destiné à un troisième bit de signalisation. Le mot M0 comprend également des premier et second champs ch1 et ch2 respectivement de 4 bits et 8 bits. Le bit BPA indique à l'état "1" un paquet d'appel PA. Le premier champ ch1 du mot M0 n'est pas utilisé pour la régie 1. Le second champ ch2 du mot M0 est destiné à contenir un numéro de circuit virtuel NCV dont l'utilisation sera précisée ultérieurement. Le mot M2 comprend des premier et second champs de mots de distance, ch1 et ch2, de 7 bits chacun. Le champ ch1 du mot M1 est destiné à contenir une distance D initialisée à "0000000" à la transmission du paquet PA. Le champ ch2 du mot M1 n'est pas utilisé pour la régie 1. Le mot M2 comprend un champs de 12 bits pour contenir le numéro d'identification NI du terminal ayant transmis le paquet d'appel PA, terminal également appelé source par la suite. Le mot M3 comprend également un champ de 12 bits pour contenir le numéro d'identification NI du terminal destinataire du paquet d'appel PA, terminal également appelé destination par la suite. De même, le mot M4 comprend un champ de 12 bits destiné à contenir un numéro d'identification NI de terminal. Le mot M5 comprend des premier, second et troisième champs ch1, ch2 et ch3, respectivement de 4 bits, 7 bits et 7 bits. Les premier et troisième champs ch1 et ch3 ne sont pas utilisés pour la régie 1. Le second champ ch2 est destiné à contenir une distance D parcourue par le paquet PA de la source à la destination.

Le contenu du champ ch1 du mot M1 indique à tout instant la "distance" parcourue par un paquet d'appel PA dans la chaîne, par rapport au noeud de commutation auquel est relié la source ayant transmis le paquet d'appel PA. Plus précisément, ce contenu indique à tout instant le nombre de noeuds traversés comptés à partir du noeud de source, nombre de noeuds désigné conventionnellement par la suite par le terme "distance". A cette fin, la distance D initialement à zéro, contenue dans le champs ch1 du mot M1 est incrémentée de 1 à chaque traversée d'un noeud de commutation pendant son parcours dans la chaîne, de sorte qu'une fois le paquet d'appel PA arrivé à destination, le champ ch1 du mot M1 contient la distance D entre la source et la destination du paquet d'appel PA.

La phase d'appel débute par la transmission du paquet d'appel PA1 par le Terminal demandeur Tdr. Le paquet d'appel PA1 doit être diffusé vers tous les terminaux.

Le paquet PA1 a pour objet d'informer le terminal Tdé d'un appel et parallèlement de déterminer la distance $D(dr\text{-}dé)$ du terminal Tdr au terminal Tdé. Cette distance $D(dr\text{-}dé)$ est utilisée pour l'acheminement des paquets de données PD du terminal Tdr au terminal Tdé. A la transmission du paquet PA1 par le terminal Tdr, le bit BPA est positionné à l'état "1" et le bit de sens BS est par exemple positionné à l'état "0". Les mots M1 et M2 contiennent respectivement le numéro d'identification NIdr du terminal demandeur Tdr et le numéro d'identification NIdé du terminal demandé Tdé. Le paquet d'appel PA1 est d'abord reçu par le noeud $N_p$. Le noeud $N_p$ mémorise dans un registre interne le numéro d'identification NIdr du terminal Tdr, incrémente de 1 la distance D contenue dans le champ ch1 du mot M1 et transmet le paquet PA1 dans la chaîne, dans le sens BS="0", vers le noeud $N_{(p+1)}$. Le noeud $N_{(p+1)}$ reçoit le paquet PA1, incrémente de 1 à son tour la distance D contenue dans le mot M1 et transmet le paquet PA1 vers le terminal qui lui est raccordé et vers le noeud $N_{(p+2)}$ toujours dans le sens BS="0". Le noeud $N_{(p+2)}$ et les noeuds suivants de la chaîne auxquels sont successivement transmis le paquet PA1 procèdent aux mêmes opérations que le noeud $N_{(p+1)}$, de sorte que le paquet PA1 est diffusé progressivement vers tous les terminaux et la distance D contenue dans le champ ch1 du mot M1 est incrémentée au fur et à mesure que le paquet PA1 parcourt la chaîne. Lorsque le paquet PA1 a accompli un tour de chaîne et est reçu à nouveau par le noeud $N_p$, celui-ci l'identifie à partir du numéro NIdr mémorisé indiquant que le paquet PA1 a parcouru totalement la chaîne. Le paquet PA1 a alors été diffusé vers tous les terminaux et le noeud $N_p$ l'élimine en ne le transmettant pas à nouveau vers le noeud $N_{(p+1)}$. Le terminal relié au noeud $N_q$ s'est reconnu à la réception du paquet PA1, à partir du numéro NIdé contenu dans le mot M3, comme étant le terminal demandé Tdé. Le paquet PA1 reçu contient la distance $D(dr\text{-}dé)$ dans le champ ch1 du mot M1. En supposant par exemple que le noeud $N_q$ est le noeud $N_{p+4}$, la distance $D(dr\text{-}dé)$ est égale à "0000101"=q-p+1=5. En réponse au paquet PA1 reçu, le terminal Tdé transmet le paquet d'appel PA2.

Le paquet d'appel PA2 a pour objet de déterminer la distance $D(dé\text{-}dr)$ du terminal Tdé au terminal Tdr et de transmettre la distance $D(dr\text{-}dé)=5$ au terminal Tdr. Le paquet d'appel PA2 comprend un bit BPA à l'état "1" et un bit de sens BS par exemple à l'état "0". A la transmission du paquet PA2 par le terminal Tdé, les mots M2 et M3 contiennent respectivement les numéros d'identification NIdé et NIdr. La distance D contenue dans le champ ch1 du mot M1 est initialisée à zéro ; elle sera incrémentée au fur et à mesure de la transmission du paquet PA2 dans l'anneau. Le champ ch2 du mot M5 contient la distance D(dr-dé)=5 à transmettre au terminal demandeur Tdr. Le paquet PA2 est transmis dans la chaîne par le noeud $N_q$. Le noeud $N_q$ mémorise le numéro NIdé du terminal Tdé contenu dans le mot M2. De même que le paquet PA1, le paquet PA2 parcourt totalement la chaîne et est diffusé vers tous les terminaux. Le terminal Tdr lit son numéro d'identification NIdr contenu dans le mot M3 du paquet PA3 reçu et se reconnaît comme étant la destination du paquet PA2. Les champs ch1 et ch2 des mots M1 et M5 sont lus ensuite. Le champ ch2 du mot M5 contient la distance D(dr-dé)=5. La distance D(dr-dé)=5 est mémorisée par le terminal Tdr. Le champ ch1 du mot M1 contient la distance D(dé-dr)=J-(q-p)+1="1111101"=125. La distance D(dé-dr)=125 est à transmettre au terminal Tdé.

Le paquet d'appel PA3 a uniquement pour objet de transmettre la distance D(dé-dr)=125 au terminal Tdé. Le paquet PA3 est transmis par le terminal Tdr de manière analogue au paquet PA1 et est diffusé vers tous les terminaux. Le champ ch2 du mot 5 du paquet PA3 contient la distance D(dé-dr)=125 à transmettre au terminal Tdé. Le paquet d'appel PA3 peut éventuellement être remplacé par un paquet de type paquet de données PD comprenant un champ d'étiquette contenant la distance D(dr-dé)=5 et un champ d'information contenant la distance D(dé-dr)=125 à transmettre.

La structure d'un paquet de données PD est montrée à la Fig. 3. Cette structure tout comme la structure d'un paquet d'appel montrée à la Fig. 2 est donnée à titre d'exemple.

En référence à la Fig. 3, un paquet de données PD comprend un champ d'étiquette de 4 octets et un champ d'information de 32 octets. Le champ d'étiquette comprend les bits de signalisation BPA et BS, un emplacement vide pour un troisième bit de signalisation, et quatre sous-champs ch1, ch2, ch3 et ch4. Les sous-champs ch1 et ch2 sont analogues aux champs ch1 et ch2 du mot M0 d'un paquet d'appel PA ; ils ont respectivement des longueurs de 4 bits et 8 bits. Le sous-champ ch1 n'est pas utilisé pour la régie 1. Le sous-champ ch2 est destiné à contenir le numéro de circuit virtuel NCV. Les sous-champs ch3 et ch4 correspondent aux champs ch1 et ch2 du mot M1 d'un paquet d'appel PA. Le champ ch1 contient la distance D déterminée pendant la phase d'appel mais en valeur négative représentée en complément à 2, notée $\overline{D}^2$. Le champ ch2 n'est pas utilisé.

Dans un paquet de données PD le bit BPA est à l'état "0" et le bit de sens BS conserve pendant toute la communication le même état que pendant la phase d'appel, soit ici BS="0".

Pour transmettre un paquet de données PD vers le terminal Tdé, le terminal Tdr positionne les bits BPA et BS et inclut dans le sous-champ ch3 du paquet PD la distance $\overline{D(dr-dé)}^2$="1111011" égale à la distance D (dr-dé)="0000101" complémentée à 2. Le paquet PD est transmis par le terminal Tdr au noeud $N_p$ qui incrémente de 1 la distance $\overline{D(dr-dé)}^2$ et transmet le paquet PD au noeud $N_{(p+1)}$. Le noeud $N_{(p+1)}$ agit de même et transmet le paquet PD au noeud $N_{(p+2)}$ qui le transmet au noeud $N_{(p+3)}$ et ainsi de suite. Le paquet PD est transmis dans la chaîne de noeud en noeud et la distance $\overline{D(dr-dé)}^2$ est incrémentée de 1 par chaque noeud traversé. Lorsque le paquet PD atteint le noeud $N_q=N_{(p+4)}$, après incrémentation par le noeud $N_q$ la distance $\overline{D(dr-dé)}^2$ à la valeur "0000000", le noeud $N_q$ détecte cette valeur "0000000" lui indiquant que le paquet PD lui est destiné et le paquet PD est commuté vers le terminal Tdé. Un paquet de données PD du terminal Tdé vers le terminal Tdr est transmis de manière analogue. La distance $\overline{D(dé-dr)}^2$="0000011" incluse dans le sous-champ d'étiquette ch3 du paquet PD est incrémentée à chaque traversée de noeud et lorsque le paquet atteint le noeud de destination $N_p$, après incrémentation par le noeud $N_p$ la distance $\overline{D(dé-dr)}^2$ a la valeur "0000000". A la détection de cette valeur $\overline{D(dé-dr)}^2$="0000000", le noeud $N_p$ reconnaît le paquet PD et le commute vers le terminal Tdr.

Dans le cas d'une communication à travers le réseau public, entre un premier terminal raccordé à la régie 1 et un second terminal dans une autre installation d'abonné également connectée au réseau public, les paquets d'appel PA et de données PD échangés entre le premier terminal et l'interface d'accès au réseau public 2 comprennent un numéro de circuit virtuel NCV, si le réseau public est du type à commutation temporelle synchrone. Le numéro NCV est une étiquette et indique le circuit virtuel que doivent emprunter dans le réseau public les paquets transmis du premier terminal vers le second terminal. Le numéro NCV est amené à l'origine par les paquets transmis par le réseau public vers le premier terminal ; il est récupéré par l'interface 2 qui l'inclut dans tous les paquets d'appel PA et de données PD transmis au premier terminal. Le premier terminal récupère le numéro NCV dans les paquets reçus et l'inclut également dans tous les paquets d'appel PA et de données PD qu'il transmet à son tour et qui sont acheminés jusqu' au second terminal à travers l'interface 2 et via le circuit virtuel de numéro NCV du réseau public.

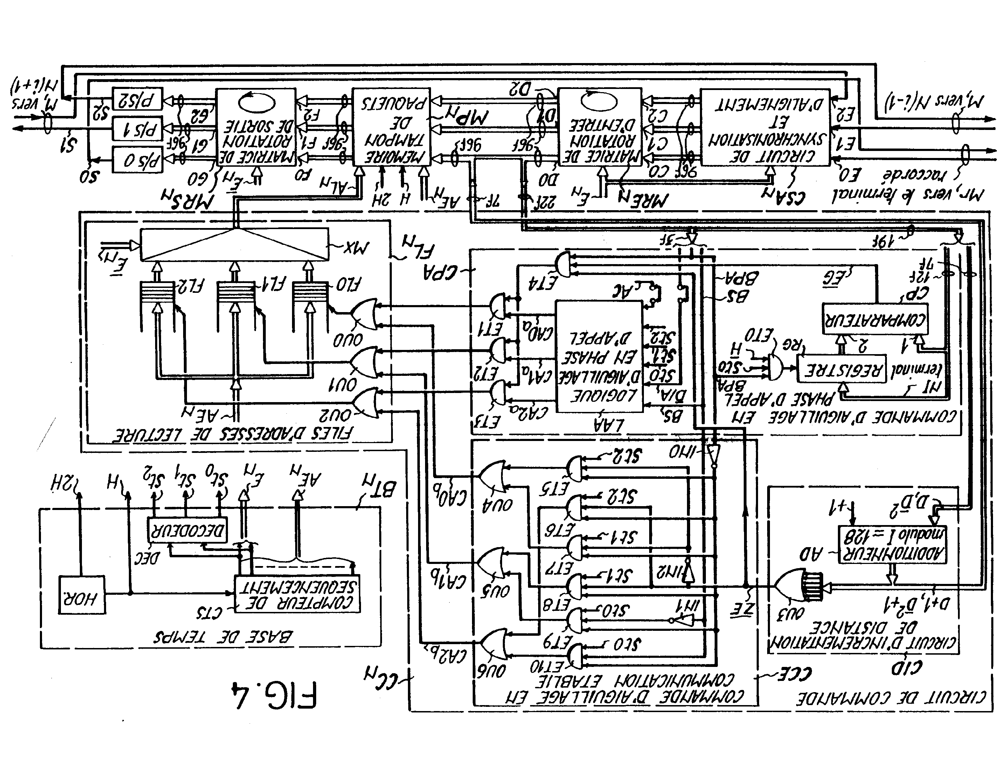

En référence à la Fig. 4, un noeud de commutation $N_i$, où i est un indice compris entre 0 et I-1=127, est de préférence constitué par un commutateur de type à conversion paragonale tel que décrit dans le brevet FR-B-2538976. Le noeud $N_i$ comprend essentiellement une base de temps $BT_N$, un circuit de synchronisation et d'alignement $CSA_N$, une matrice de rotation d'entrée $MRE_N$, une mémoire tampon de paquets MP$_N$, une matrice de rotation de sortie MRS$_N$, et un circuit de commande CC$_N$.

La base de temps BT$_N$ comprend une horloge HOR, un compteur de séquencement CTS, et un décodeur DEC. L'horloge HOR délivre une horloge de rythme d'octet H et une horloge 2H de fréquence double à celle de l'horloge H. Les horloges H et 2H sont fournies à la mémoire tampon MP$_N$ et commandent le séquencement des écritures et lectures de paquets dans la mémoire tampon MP$_N$.

Le compteur de séquencement CTS reçoit l'horloge H et délivre cycliquement des adresses d'écriture de paquets AE$_N$ à la mémoire tampon MP$_N$ et à des entrées de trois files d'adresses de lecture FL0, FL1 et FL2 incluses dans le circuit de commande CC$_N$. Deux sorties de poids les plus faibles du compteur CTS sont reliées à un bus de sélection de multiplex E$_N$ à 2 fils. Le bus E$_N$ véhicule cycliquement trois adresses de multiplex 00, 01 et 10 fournies par le compteur CTS et déterminant des intervalles temporels et attribuées respectivement à trois multiplex entrants E0, E1 et E2 à trois multiplex sortant S0, S1 et S2. Les multiplex E0 et S0, E1 et S2, et S1 et E2 constituent respectivement le multiplex bidirectionnel de raccordement Mr reliant le noeud N$_i$ au terminal raccordé, le multiplex bidirectionnel M reliant le noeud N$_i$ au noeud N$_{(i-1)}$ et le multiplex bidirectionnel M reliant le noeud N$_i$ au noeud N$_{(i+1)}$.

Le bus E$_N$ est connecté à des entrées du décodeur DEC, à des entrées de commande du circuit de synchronisation et d'alignement CSA$_N$ et à des entrées de commande de rotation de la matrice de rotation d'entrée MRE$_N$. Le décodeur DEC fournit par trois sorties des signaux St0, St1 et St2 à l'état "1" respectivement lorsque le décodeur DEC détecte les adresses de multiplex 00, 01 et 10 à ses entrées. Un bus $\overline{E}_N$ véhicule cycliquement les adresses de multiplex 10, 01 et 00 dans un ordre inverse par rapport au bus E$_N$. Le bus $\overline{E}_N$ est relié à des entrées de commande d'un multiplexeur MX inclus dans le circuit de commande CC$_N$, et à des entrées de commande de rotation de la matrice de rotation de sortie MRS$_N$.

Le circuit CSA$_N$ a pour fonction de recevoir les paquets entrants véhiculés sous forme série par les multiplex E0, E1 et E2, de récupérer la synchronisation, d'aligner les paquets et de les transmettre par groupe de 96 bits en parallèle à la matrice de rotation d'entrée MRE$_N$, sous la commande des adresses de multiplex 00, 01 et 10 délivrées par le bus E$_N$. Trois groupes de 96 bits issus des multiplex entrants E0, E1 et E2 sont transmis par le circuit CSA$_N$ vers trois ports d'entrée C0, C1 et C2 de la matrice de rotation d'entrée MRE$_N$ respectivement pendant les intervalles t0, t1 et t2.

La matrice de rotation d'entrée MRE$_N$ réalise un cycle de 0 à 2 permutations circulaires et délivre les paquets sous forme diagonale par trois ports de sorties D0, D1 et D2 à 96 sorties parallèles chacun. Les 5 premiers mots de 18 bits d'un paquet d'appel sont entièrement délivrés par les 90 premières sorties du port D0 en un seul intervalle de temps, les informations fournies par les six dernières sorties du port D0 et par les ports D1 et D2 étant aiguillés normalement. Un paquet de données PD composé de 36 octets=96x3 bits est fourni en diagonale par les ports D0 à D2. En supposant que le paquet PD provient du multiplex entrant E0, un premier groupe de bits du paquet PD est fourni par le port D0 pendant l'intervalle temporel t0, un second groupe de bits est fourni par le port D1 pendant l'intervalle temporel t1, et un troisième et dernier groupe de bits du paquet PD est fourni par le port D2 pendant l'intervalle temporel t2.

Les bits BPA et BS présents sur les deux premières sorties du port D0 et le numéro d'identification NI de la source présent sur les trente-septième à quarante-huitième sorties du port D0 dans le cas d'un paquet d'apppel PA entrant, sont fournis au circuit de commande CC$_N$ et à des entrées d'un premier port correspondant de la mémoire tampon MP$_N$. La distance D, $\overline{D}^2$ présente sur les dix-neuvième à vingt-cinquième sorties du port D0 et devant être incrémentée est fournie uniquement au circuit CC$_N$. Une troisième sortie du port D0 non valide pour la régie 1 est toutefois connectée au circuit CC$_N$. Cette troisième sortie fournit un troisième bit de signalisation $\overline{D}$/A pour la seconde réalisation préférée de l'invention décrite par la suite. Toutes les sorties restantes du port D0 sont connectées à des entrées correspondantes du premier port d'entrée de la mémoire tampon MP$_N$. Le circuit de commande CC$_N$ délivre une distance incrémentée D+1, $\overline{D}^2$+1 en réponse à la distance D, $\overline{D}^2$ fournie. Cette distance incrémentée D+1, $\overline{D}^2$+1, est délivrée à des entrées correspondantes du premier port d'entrée de la mémoire tampon MP$_N$ pour être incluse dans le champ de distance correspondant du paquet entrant en cours d'écriture dans la mémoire tampon MP$_N$. Les ports D1 et D2 de la matrice MRE$_N$ sont reliés respectivement à des second et troisième ports d'entrée de la mémoire tampon MP$_N$.

La mémoire tampon MP$_N$ comprend trois sous-mémoires tampons composées de cellules de mémoire de 96 bits et un circuit d'adressage de lecture (non représentés). Les 3 groupes de bits d'un paquet sont mémorisés sous forme diagonale respectivement dans les trois sous-mémoires. Le premier groupe est mémorisé dans une cellule d'adresse AE$_N$ de la première sous-mémoire ; le second groupe est mémorisé dans une cellule d'adresse AE$_N$+1 de la seconde sous-mémoire et le troisième groupe est mémorisé dans une cellule d'adresse AE$_N$+2 de la troisième sous-mémoire. Le circuit d'adressage de lecture a pour fonction de produire à partir d'une adresse de lecture AL$_N$ délivrée par le circuit de commande CC$_N$ des adresses AL$_N$+1 et AL$_N$+2. Les adresses AL$_N$, AL$_N$+1 et AL$_N$+2 sont appliquées respectivement à des entrées d'adresses des première, seconde et troisième sous-mémoires pour lire un paquet sortant à transmettre vers la matrice de rotation de sortie MRS$_N$.

La matrice MRS$_N$ réalise un cycle de 2 à 0 permutations circulaires. Ces permutations circulaires sont réalisées dans un sens inverse à celles réalisées par la matrice de rotation d'entrée MRE$_N$ afin de réaliser une conversion paragonale inverse et de délivrer les paquets sortants sous forme parallèle. Les paquets sortants sous forme diagonale sont fournis par trois ports de sortie de la mémoire tampon MP$_N$ respectivement reliés à trois ports d'entrée F0, F1 et F2 de la matrice MRS$_N$. Trois ports de sortie G0, G1 et G2 transmettent par groupes de 96 bits les paquets sortants respectivement vers 3 multiplex sortants S0, S1 et S2. Des convertisseurs parallèle/série P/S0, P/S1 et P/S2 sont intercalés respectivement entre les ports G0, G1 et G2 et les multiplex sortants S0, S1 et S2 afin de sérialiser les bits des paquets sortants.

Le circuit de commande CC$_N$ comprend un circuit de files d'adresses de lecture FL$_N$, un circuit d'incrémentation de distance CID, un circuit de commande d'aiguillage en phase d'appel CPA, et un circuit de commande d'aiguillage en communication établie CCE.

Le circuit de files d'adresses de lecture FL$_N$ comprend trois files FL0 à FL2 du type FIFO, trois portes OU à deux entrées chacune OU0, OU1 et OU2, et un multiplexeur MX.

Les files F0 à F2 sont respectivement associées aux multiplex sortants S0 à S2. Chacune des files mémorise par ordre chronologique d'arrivée des paquets les adresses dans la mémoire tampon MP$_N$ des cellules où sont mémorisés les paquets à transmettre vers le multiplex sortant associé. Toutes les files reçoivent en entrée les adresses AE$_N$ délivrées par la base de temps BT$_N$. A travers les portes OU0 à OU2, les files FL0 à FL2 reçoivent respectivement des signaux de commande d'aiguillage CA0$_a$ à CA2$_a$ délivrés par le circuit CPA pendant la phase d'appel, et des signaux de commande d'aiguillage CA0$_b$ à CA2$_b$ délivrés par le circuit CCE pendant la phase de communication. Un signal de commande d'aiguillage à l'état "1" commande le chargement dans la file correspondante de l'adresse AE$_N$ appliquée à ses entrées de données. Les trois files FL0 à FL2 sont reliées en sortie respectivement à trois ports d'entrée du multiplexeur MX. Le multiplexeur MX délivre en sortie les adresses de lecture AL$_N$ multiplexées et fournies à la mémoire tampon MP$_N$.

Le circuit d'incrémentation de distance CID comprend un additionneur modulo I=128, AD, et une porte OU à sept entrées OU3. L'additionneur AD reçoit à des premières entrées parallèles la distance D, $\overline{D}^2$ fournie par le port D0 de la matrice MRE$_N$ et à une seconde entrée l'incrément +1 à ajouter à la distance D, $\overline{D}^2$. L'additionneur AD délivre en sortie la distance incrémentée D+1, $\overline{D}^2$+1. Cette distance est fournie aux entrées de la porte OU3 et au premier port d'entrée de la mémoire tampon MP$_N$. La porte OU3 détecte lorsque la distance incrémentée D+1 $\overline{D}^2$+1 est égale à la valeur "0000000". La porte OU3 délivre alors un signal $\overline{ZE}$ qui prend l'état actif "0". Le signal $\overline{ZE}$ est fourni au circuit de commande d'aiguillage en phase d'appel CPA et au circuit de commande d'aiguillage en communication établie CCE.

Le circuit de commande d'aiguillage en phase d'appel CPA comprend un registre RG, un comparateur de mots CP, une porte logique ET à trois entrées ET0, un circuit de logique d'aiguillage en phase d'appel LAA, 3 portes logiques ET à deux entrées chacune ET1 à ET3, et une porte logique ET à trois entrées ET4.

Le registre RG, le comparateur CP et la porte ET0 constituent des moyens pour mémoriser le numéro d'identification NI du terminal raccordé lorsque celui-ci transmet un paquet d'appel PA et pour comparer ce numéro NI au numéro d'identification de chaque paquet d'appel entrant afin de détecter si le paquet d'appel entrant est un paquet transmis par le terminal et ayant accompli un tour de chaîne ; auquel cas le paquet d'appel entrant est à éliminer.

Le registre RG reçoit à des entrées parallèles le numéro NI de la source inclus dans le paquet d'appel entrant PA. Le numéro NI est également appliqué à des premières entrées parallèles du comparateur CP. Des sorties parallèles du registre RG par lesquelles est fourni le numéro NI mémorisé sont reliées à des secondes entrées du comparateur CP. La porte ET0 a pour fonction de commander la mémorisation du numéro NI dans le registre RG lorsque le paquet d'appel entrant provient directement du terminal raccordé pour être transmis dans la chaîne. La porte ET0 reçoit à des première, seconde et troisième entrées respectivement le bit BPA, le signal St0 et un signal de rythme d'octet complémentaire $\overline{H}$ et délivre en sortie une commande de chargement fournie au registre RG. Le bit BPA et le signal St0 à l'état "1" indiquent que le paquet entrant est un paquet d'appel PA provenant du multiplex E0 relié au terminal. Le signal $\overline{H}$ synchronise la commande de chargement délivrée par la porte ET0. Lorsqu'un paquet d'appel PA transmis par le terminal raccordé au noeud N$_i$ a parcouru un tour de chaîne et est fourni un noeud N$_i$ par le multiplex entrant E1 ou E2, ce paquet d'appel PA est détecté par le comparateur CP qui délivre consécutivement un signal $\overline{EG}$ à l'état actif "0". Le signal $\overline{EG}$ est appliqué à une première entrée de la porte ET4.

La porte ET4 a pour fonction de commander la fermeture des portes ET1 à ET3 au travers desquelles sont fournis par le circuit de logique d'aiguillage en phase d'appel LAA les trois signaux de commande CA0$_a$ à CA2$_a$ destinés aux files d'adresses d'écriture FL0 à FL2. La porte ET4 reçoit également à des seconde et troisième entrées respectivement le bit BPA et le signal $\overline{ZE}$ fourni par le circuit d'incrémentation de distance CID. Ainsi, dans le cas où $\overline{EG}$="0", BPA="0",

ou $\overline{ZE}$="0" les portes ET1 à ET3 sont fermées et le circuit CPA ne délivre pas les signaux de commande CA0$_a$ à CA2$_a$ aux files FL0 à FL2. Les paquets d'appel PA ayant accompli un tour de la chaîne, BPA="1" et $\overline{EG}.\overline{ZE}$="0", sont éliminés, leurs adresses d'écriture respectives n'étant pas chargées dans les files. La communication une fois établie, le bit BPA est à 1 état "0" et le circuit CPA est désactivé par la fermeture des portes ET1 à ET3 qui bloquent les signaux de commande CA0$_a$ à CA2$_a$.

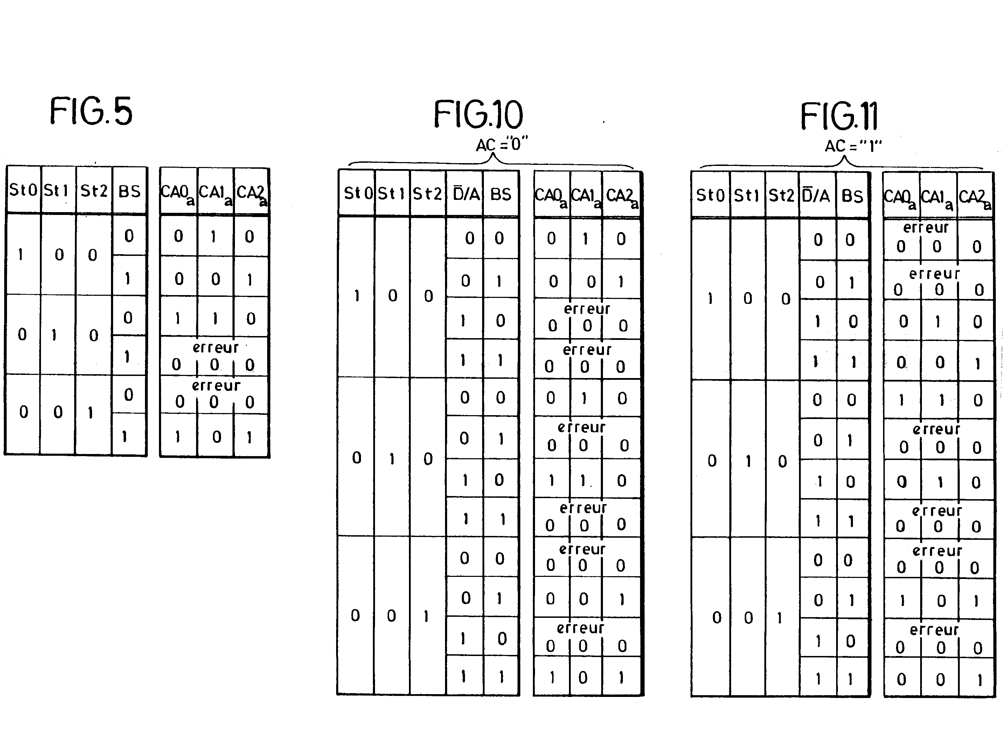

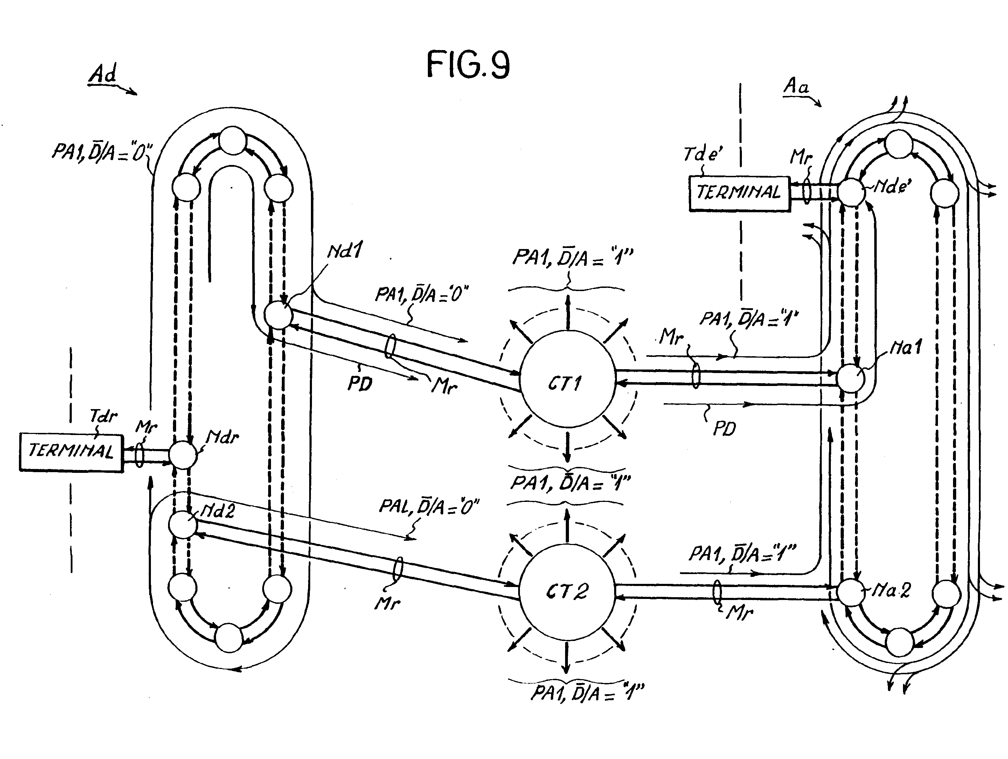

Le circuit de logique d'aiguillage en phase d'appel a pour fonction de produire les signaux de commande CA0$_a$ à CA2$_a$ en fonction du bit BS et des signaux St0 à St2. Le bit $\overline{D}$/A et un signal AC apparaissant à la Fig. 7 ne sont pas utilisés pour la régie 1 ; les entrées correspondantes du circuit LAA sont déconnectées. La table de vérité du circuit LAA est montrée à la Fig. 5. Cette table précise le fonctionnement des noeuds en mode d'appel décrit précédemment en référence aux Figs. 1 à 3, notamment lorsque des paquets entrants ont des bits de sens BS ayant des valeurs erronées ne correspondant pas aux multiplex entrants.

Le circuit de commande d'aiguillage en communication établie CCE a pour fonction de produire les signaux de commande d'aiguillage CA0$_b$ à CA2$_b$ en fonction des bits BPA et BS, des signaux $\overline{ZE}$ et St0 à St2. Le circuit CCE comprend six portes ET à deux entrées chacune ET5 à ET10, trois portes OU à deux entrées chacunes OU4 à OU6, et trois inverseurs IN0 à IN2.

Le bit BPA est appliqué à travers l'inverseur IN0 à des premières entrées respectivement des portes ET5 à ET10. Le bit BS est appliqué directement à une seconde entrée de la porte ET10 et à travers l'inverseur IN1 à une seconde entrée de la porte ET9. Le signal $\overline{ZE}$ est appliqué directement à des secondes entrées des portes ET6 et ET8 et à travers l'inverseur IN2 à des secondes entrées des portes ET5 et ET7. Le signal St0 est appliqué à des troisièmes entrées des portes ET9 et ET10, le signal St1 à des troisièmes entrées des portes ET7 et ET8, et le signal St2 à des troisièmes entrées des portes ET5 à ET6. Des sorties des portes ET7, ET9 et ET10 sont reliées respectivement à des premières entrées des portes OU4, OU5 et OU6. Des sorties des portes ET5, ET8 et ET6 sont reliées respectivement à des secondes entrées des portes OU4, OU5 et OU6. Les portes OU4 à OU6 délivrent en sortie respectivement les signaux CA0$_b$ à CA2$_b$. Les signaux CA0$_b$ à CA2$_b$ sont appliqués respectivement à des secondes entrées des portes OU0 à OU2 dans le circuit FL$_N$ afin de commander le chargement des adresses d'écriture AE$_N$ dans les files FL0 à FL2.

Le bit BPA="0" signale les paquets entrants comme étant des paquets de données PD. Le bit BPA="0" ouvre les portes ET5 à ET10 et autorise donc le fonctionnement du circuit CCE. Les portes ET5 et ET6 commandent l'aiguillage d'un paquet PD entrant par le multiplex E2 et provenant du noeud N$_{(i+1)}$ respectivement vers le multiplex S0 relié au terminal raccordé si le signal $\overline{ZE}$="0", c'est-à-dire si $\overline{D}^2$+1="0000000", et vers le multiplex S2 relié au noeud N$_{(i-1)}$ si le signal $\overline{ZE}$="1", c'est-à-dire si $\overline{D}^2$+1≠"0000000". Les portes ET7 et ET8 commandent l'aiguillage d'un paquet PD entrant par le multiplex E1 et provenant du noeud N$_{(i-1)}$ respectivement vers le multiplex S0 si le signal $\overline{ZE}$="0" et vers le multiplex S1 relié au noeud N$_{(i+1)}$ si le signal $\overline{ZE}$="1". Les portes ET9 et ET10 commandent l'aiguillage d'un paquet PD entrant par le multiplex E0 et provenant du terminal raccordé respectivement vers le multiplex S2 si le bit de sens BS="1" et vers le multiplex S1 si le bit de sens BS="0".

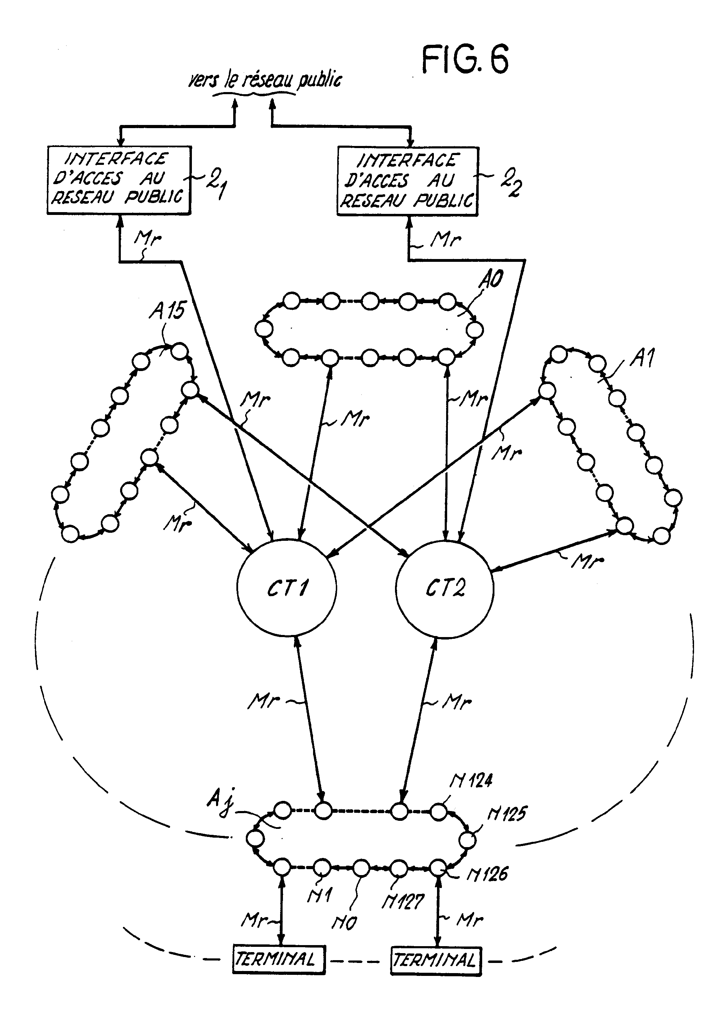

En référence à la Fig. 6, la seconde réalisation préférée d'un réseau selon l'invention comprend essentiellement J=16 chaînes de raccordement de terminaux A0 à A15 et deux commutateurs centraux CT1 et CT2. Cette seconde réalisation a une structure en chaîne-étoile et est plus particulièrement destinée à un réseau local d'entreprise.

Les chaînes A0 à A15 sont analogues à la chaîne formant la régie 1 montré à la Fig. 1 ; ils comprennent chacun un maximum de 128 noeuds de commutation N0 à N127. Dans une chaîne quelconque A$_j$, où j est un indice entier compris entre 0 et J-1=15, deux noeuds quelconques de la chaîne sont reliés respectivement aux commutateurs centraux CT1 et CT2. Les noeuds restants sont reliés à des terminaux. Une ou plusieurs interfaces d'accès au réseau public telles que l'interface 2 montrée à la Fig. 1 peuvent être prévues pour relier le réseau local au réseau public. Deux interfaces 2$_1$ et 2$_2$ respectivement reliées aux commutateurs centraux CT1 et CT2 sont montrées à la Fig. 6.

Les commutateurs centraux CT1 et CT2 sont analogues et fonctionnent en partage de charge. Selon une variante de réalisation pour un trafic plus faible, le réseau comprend un seul commutateur central au lieu de deux.

De même que pour la régie 1, préalablement à l'établissement d'une communication entre un terminal demandeur Tdr et un terminal demandé Tdé, 3 paquets d'appel PA1, PA2 et PA3 sont échangés entre ces terminaux afin de déterminer et de se communiquer les distances nécessaires à la transmission des paquets de données PD.

Comme montré à la Fig. 7, un paquet d'appel PA dans cette seconde réalisation comprend un troisième bit de signalisation $\overline{D}$/A inclus dans le mot M0 en plus des bits BPA et BS. Le bit $\overline{D}$/A est utilisé pour distinguer en deux catégories les paquets d'appel PA parcourant une chaîne A$_j$. Les paquets d'appel PA dont le bit $\overline{D}$/A est à l'état "0" ont été transmis dans la chaîne A$_j$ par des sources raccordées à la chaîne. Ces paquets PA, $\overline{D}$/A="0", doivent être en premier lieu aiguillés vers les commutateurs CT1 et CT2 qui posi-

tionneront leurs bits $\overline{\text{D}}$/A respectifs à l'état "1" et diffuseront ces paquets PA, $\overline{\text{D}}$/A="1", vers toutes les chaînes y compris la chaîne $A_j$. Dans la chaîne $A_j$, les paquets PA, $\overline{\text{D}}$/A="1", sont diffusés vers tous les terminaux raccordés, et éliminés après avoir parcouru un tour de la chaîne. Le champ ch1 du mot M0 est destiné à contenir une distance DES de 4 bits représentative de la commutation réalisée par un commutateur central. Les champs ch1 et ch2 du mot M1 sont destinés à contenir respectivement des distances DCD et DCA de 7 bits chacune. Les distances DES, DCD et DCA sont initialisées à zéro à la transmission du paquet PA par la source. La distance DCD représente dans une chaîne de départ auquel est raccordée la source, la distance entre le noeud relié à la source et le noeud relié au commutateur central vers lequel est commuté le paquet PA. La distance DCA représente dans une chaîne d'arrivée auquel est raccordé la destination, la distance entre le noeud relié au commutateur central à travers lequel le paquet PA est transmis dans la chaîne et le noeud relié à la destination. Le mot M4 contient le numéro d'identification NI de la source, de même que le mot M2. Les champs ch1, ch2 et ch3 sont destinés respectivement à contenir les distances déterminées DES, DCD et DCA par le paquet d'appel précédent.

Comme montré à la Fig. 8, lors de sa transmission par la source, un paquet de données PD contient dans son champ d'étiquette les distances $\overline{\text{DES}}^2$, $\overline{\text{DCD}}^2$ et $\overline{\text{DCA}}^2$ correspondant aux distances DES, DCD et DCA complémentées à 2.

A la Fig. 9 sont montrés en exemple des parcours effectués par un premier paquet d'appel PA1 et un paquet de données PD transmis par un terminal demandeur Tdr raccordé à une chaîne de départ Ad vers un terminal demandé Tdé raccordé à une chaîne d'arrivée Aa.

Le paquet d'appel PA1 avec le bit $\overline{\text{D}}$/A="0" est transmis dans la chaîne Ad par le noeud Ndr relié au terminal Tdr. Le paquet PA1 parcourt la chaîne et la distance DCD initialement à zéro est incrémentée de 1 par chaque noeud traversé. Le paquet PA1 n'est pas diffusé à ce stade vers les autres terminaux raccordés à la chaîne. Le paquet PA1 est transmis vers les commutateurs CT1 et CT2 par des noeuds Nd1 et Nd2 respectivement reliés à ces commutateurs. Lorsque le paquet PA1 revient au noeud Ndr après avoir parcouru un tour de la chaîne Ad, il est éliminé par le noeud Ndr qui reconnaît son numéro d'identification NI mémorisé à la transmission du paquet PA1 dans la chaîne Ad et qui détecte également la distance DCD="0000000" après un tour de chaîne, dans le cas où la chaîne comprend 128 noeuds. Les commutateurs CT1 et CT2 positionnent le bit $\overline{\text{D}}$/A à l'état "1", intervertissent les contenus des champs de distance ch1 et ch2 du mot M1, soit les distances DCD et DCA, remplacent le numéro NI de source dans le mot M2 par un numéro d'identification NI attribué au commutateur, et diffusent le paquet PA1, $\overline{\text{D}}$/A="1", vers toutes les chaînes A0 à A127. Chacun des paquets diffusés PA1, $\overline{\text{D}}$/A="1", par un commutateur central contient une distance DES respective incluse dans le paquet par le commutateur.

Deux paquets d'appel PA1, $\overline{\text{D}}$/A="1", transmis respectivement par les commutateurs CT1 et CT2 sont reçus par des noeuds Na1 et Na2 de la chaîne Aa reliés respectivement à ces commutateurs. Les noeuds Na1 et Na2 mémorisent respectivement les numéros d'identification NI des commutateurs contenus dans les paquets reçus. Les noeuds Na1 et Na2 transmettent ensuite les deux paquets PA1 dans la chaîne Aa. Les deux paquets PA1 parcourent la chaîne Aa et sont diffusés vers tous les terminaux raccordés. A chaque traversée d'un noeud par un paquet PA1, la distance DCA initialement à zéro et contenue maintenant dans le champ ch1 du mot M1 est incrémentée de 1. Le terminal demandé Tdé reconnaît qu'un paquet d'appel PA1 lui est destiné à partir du numéro NI de destination contenu dans le mot M3 du paquet. Lorsque les paquets d'appel PA1 transmis dans la chaîne Aa par les noeuds Na1 et Na2, reviennent après un tour de la chaîne aux noeuds Na1 et Na2, ils sont reconnus à partir des numéros NI des commutateurs CT1 et CT2, contenus dans le mot M2 et mémorisé par les noeuds Na1 et Na2. La distance DCA="0000000" contenue dans le paquet d'appel PA1 après un tour de la chaîne, dans le cas où la chaîne comprend 128 noeuds, est également détectée par le noeud Na1, Na2. Les deux paquets d'appel PA1 transmis dans la chaîne Aa par les noeuds Na1 et Na2 et ayant parcouru chacun un tour de la chaîne sont éliminés respectivement par les noeuds Na1 et Na2. Un seul des deux paquets d'appel PA1 est retenu par le terminal Tdé. Un critère tel qu'une somme de distances DCD+DCA minimum correspondant à un temps de transit minimum peut par exemple être utilisé par le terminal Tdé afin de déterminer le paquet à retenir. Les paquets d'appel PA2 et PA3 sont ensuite transmis entre les terminaux Tdr et Tdé de manière analogue à la transmission du paquet PA1 et à la fin de la phase d'appel, les terminaux Tdr et Tdé disposent des différentes distances DES, DCD et DCA nécessaires à la transmission des paquets de données PD.

En considérant par exemple, comme montré à la Fig. 9, que le trajet via le commutateur CT1 est celui qui est retenu pour la transmission des paquets PD du terminal Tdr vers le terminal Tdé. Un paquet PD transmis par le terminal Tdr parcourt la chaîne de départ Ad. La distance $\overline{\text{DCD}}^2$ contenue dans le paquet PD est incrémentée de 1 par chaque noeud traversé. Après incrémentation par le noeud Nd1, cette distance $\overline{\text{DCD}}^2$ prend la valeur "0000000" et le paquet PD est transmis vers le commutateur CT1, les contenus des sous-champs de distance ch3 et ch4 du champ d'étiquette du paquet PD, contenant initialement les distances $\overline{\text{DCD}}^2$ et $\overline{\text{DCA}}^2$, sont intervertis et la distan-

ce $\overline{DES}^2$ est utilisée par le commutateur CT1 pour commander la commutation du paquet PD vers un multiplex sortant relié au noeud Na1 de la chaîne d'arrivée Aa. Le paquet PD est transmis dans la chaîne Aa par le noeud Na1. La distance $\overline{DCA}^2$ contenue dans le sous-champ ch3 est incrémentée de 1 par chaque noeud traversé. Après incrémentation par le noeud Ndé, cette distance $\overline{DCA}^2$ prend la valeur "0000000" et le paquet PD est commuté vers le terminal Tdé. La transmission d'un paquet PD du terminal Tdé vers le terminal Tdr se déroule de manière analogue.

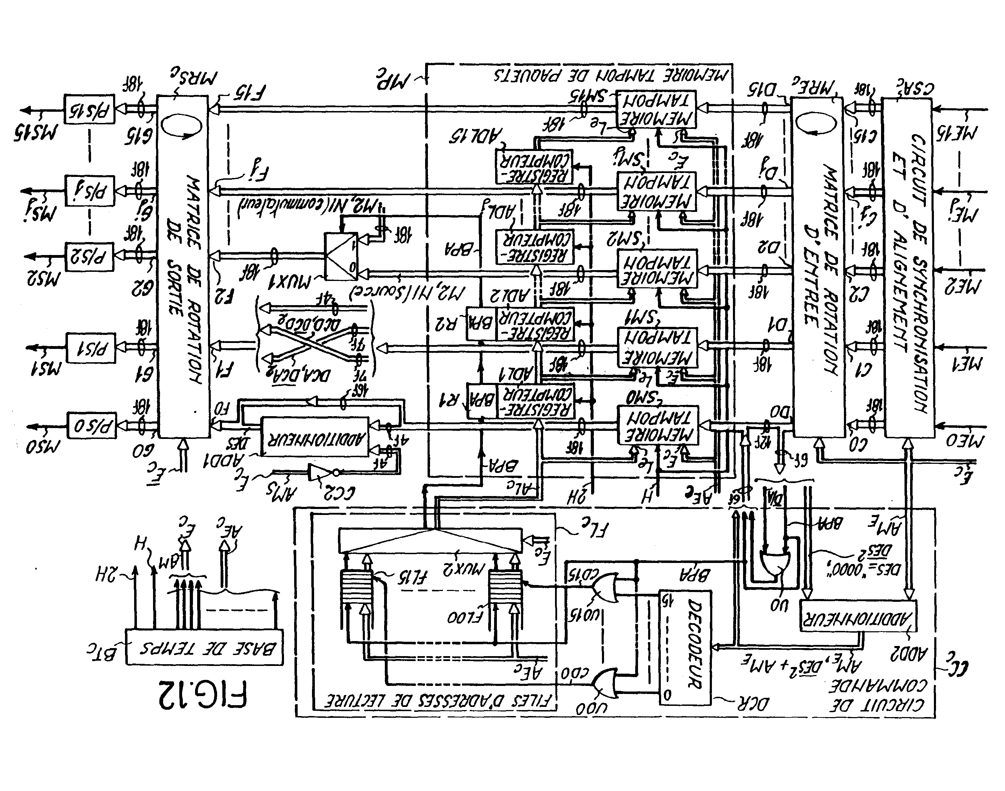

En référence à nouveau à la Fig. 4, dans les noeuds de commutation inclus dans cette seconde réalisation, le bit $\overline{D}/A$ et le signal AC sont appliqués en entrée du circuit de logique d'aiguillage en phase d'appel LAA en plus du bit BS et des signaux St0 à St2. Les noeuds reliés aux commutateurs centraux CT1, CT2 diffèrent des noeuds reliés à des terminaux par leur fonctionnement en phase d'appel. Dans un noeud relié à un terminal ou à une interface, le signal AC est positionné à l'état "0" et le circuit LAA a alors une table de vérité montrée à la Fig. 10. Cette table de vérité indique les états des signaux de commande d'aiguillage $CA0_a$ à $CA2_a$ pour toutes les combinaisons possibles de signaux d'entrée. Dans un noeud relié à un commutateur central CT1, CT2 le signal AC est positionné à l'état "0" et le circuit LAA a alors une table de vérité différente montrée à la Fig. 11. Les tables de vérité montrées aux Figs. 10 et 11 précisent le fonctionnement des noeuds de commutation en phase d'appel décrit précédemment en référence à la Fig. 9.

En référence à la Fig. 12, un commutateur central CT1, CT2 est de préférence constitué de même que le noeud de commutation $N_i$ montré à la Fig. 4, d'un commutateur de type à conversion paragonale. Le commutateur comprend essentiellement une base de temps $BT_C$, un circuit de synchronisation et d'alignement $CSA_C$, une matrice de rotation d'entrée $MRE_C$, une mémoire tampon de paquets $MP_C$, une matrice de rotation de sortie $MRS_C$, un circuit de commande $CC_C$, un additionneur ADD1, et un multiplexeur MUX1.

La base de temps $BT_C$ produit les signaux de rythme H et 2H, des adresses d'écriture de paquet $AE_C$, et J=16 adresses de multiplex AM="0000" à "1111" fournies par un bus de séquencement $E_C$.

Au circuit de synchronisation et d'alignement $CSA_C$ sont connectés en entrée J=16 multiplex entrants ME0 à ME15 convoyant des paquets provenant respectivement des J=16 chaînes A0 à A15. Le circuit $CSA_C$ délivre les paquets par groupes de 18 bits dans J=16 bus de sortie connectés respectivement à J=16 ports d'entrée C0 à C15 de la matrice de rotation d'entrée $MRE_C$. Le circuit $CSA_C$ et la matrice $MRE_C$ ont des entrées de commande reliées au bus de séquencement $E_C$ et reçoivent les adresses de multiplex AM="0000" à "1111" sélectionnant respectivement les J=16 multiplex entrants ME0 à ME15 et J=16 multiplex sortants MS0 à MS15.

La matrice de rotation d'entrée $MRE_C$ réalise un cycle de 0 à J-1=15 permutations circulaires sur les groupes de 18 bits de paquets entrants et délivre sous forme diagonale les paquets entrants par J=16 ports de dix-huit sorties chacun, D0 à D15. Les bits significatifs des paquets d'appel PA constitués de six mots M0 à M5 de 18 bits chacun sont délivrés par les ports de sortie D0 à D5. Les paquets de données PD constitués chacun de J=16 groupes de 18 bits, soit 288 bits, sont délivrés par les ports de sortie D0 à D15. Les bits BPA, $\overline{D}/A$ et la distance DES ou $\overline{DES}^2$ délivrés par des sorties correspondantes du port D0 sont fournis au circuit de commande $CC_C$. Les sorties restantes du port D0 sont reliées à des entrées de données correspondantes d'une sous-mémoire tampon SM0 de la mémoire tampon de paquets $MP_C$. Les ports D1 à D15 sont respectivement reliés à des ports d'entrée de sous-mémoires tampons SM1 à SM15 de la mémoire tampon $MP_C$.

La mémoire tampon $MP_C$ comprend les J=16 sous-mémoires SM0 à SM15 et un circuit d'adressage en lecture constitué par J-1=15 registres-compteurs ADL1 à ADL15 connectés en cascade.

Chacune des sous-mémoires tampons M0 à M15 reçoit le signal H à une entrée d'horloge et les adresses $AE_C$ fournies par la base de temps $BT_C$ à des entrées d'adresses d'écriture $E_C$. A des entrées d'adresses de lecture $L_e$, la sous-mémoire tampon SM0 reçoit des adresses de lecture $AL_C$ délivrées par un circuit de files d'adresses de lecture $FL_C$ inclus dans le circuit de commande $CC_C$. Les adresses $AL_C$ sont également fournies à des entrées de données du registre-compteur ADL1. Les registres-compteurs ADL1 à ADL15 reçoivent chacun à des entrées de commande respectives le signal 2H. Les registres-compteurs ALD1 à ADL15 délivrent respectivement en diagonale des adresses $AL_C+1$ à $AL_C+15$ qui sont fournies respectivement aux entrées Le des sous-mémoires SM1 à SM15. Les adresses $AL_C$ à $AL_C+15$ adressent en lecture des cellules de mémoire des sous-mémoires SM0 à SM15 où sont mémorisés en diagonale des paquets à transmettre vers les J=16 multiplex sortants MS0 à MS15 respectivement reliés aux chaînes A0 à A15.

Les registres-compteurs ADL1 et ADL2 comprennent respectivement des registres R1 et R2 connectés en série. Les registres R1 et R2 sont des registres de 1 bit chacun destinés à mémoriser le bit BPA du paquet sortant de la mémoire tampon $MP_C$. Les contenus des registres R1 et R2, soit le bit BPA, ne sont pas incrémentés sous la commande du signal 2H, comme le sont les adresses $AL_C$ et $AL_C+1$ pour produire respectivement les adresses $AL_C+1$ et $AL_C+2$, . Le bit BPA et l'adresse $AL_C+1$ sont délivrés en parallèle par le registre-compteur ADL2. Le bit BPA fourni par le re-

gistre-compteur ADL2 est appliqué à une entrée de commande du multiplexeur MUX1.

Le multiplexeur MUX1 comprend des premières entrées reliées à des sorties de la sous-mémoire tampon SM2 et des secondes entrées auxquelles sont appliquées un mot M2 (Fig. 7) contenant le numéro d'identification NI du commutateur. Lorsque le bit BPA="0", le paquet en cours de lecture dans la mémoire tampon $MP_C$ est un paquet de données PD. Les premières entrées du multiplexeur MUX1 sont sélectionnées par le bit BPA="0" et le groupe de bits de données du paquet PD délivré par la sous-mémoire SM2 est transmis à travers le multiplexeur MUX1 vers un port d'entrée F2 de la matrice de rotation de sortie $MRS_C$. Lorsque le bit BPA="1", le paquet en cours de lecture est un paquet d'appel PA et la sous-mémoire SM2 délivre le mot M2 contenant le numéro d'identification NI de la source. les secondes entrées du multiplexeur MUX1 sont sélectionnées par le bit BPA="1" et le numéro d'identification NI du commutateur est transmis vers le port F2 de la matrice et remplace le numéro NI de la source dans le mot M2 du paquet PA.

La sous-mémoire SM1 délivre en sortie les distances DCD et DCA="0000000" dans le cas d'un paquet d'appel PA en cours de lecture et les distances $\overline{DCD}^2$="0000000" et $\overline{DCA}^2$ dans le cas d'un paquet de données PD en cours de lecture. Un premier groupe de sept sorties de la sous-mémoire SM1 délivre la distance DCD ou $\overline{DCD}^2$ ; un second groupe de sept sorties de la sous-mémoire SM1 délivre la distance DCA ou $\overline{DCA}^2$. Ces premier et second groupes de sorties de la sous-mémoire SM2 sont reliés respectivement à des second et premier groupes d'entrées d'un port d'entrée correspondant F1 de la matrice $MRS_C$ afin de "croiser" les distances DCD et DCA, ou $\overline{DCD}^2$ et $\overline{DCA}^2$, dans le paquet, PA ou PD, en cours de lecture, de telle sorte que la distance DCD, ou $\overline{DCD}^2$, occupe le champ précédemment occupé par la distance DCA, ou $\overline{DCA}^2$, et que la distance DCA, ou $\overline{DCA}^2$, occupe le champ précédemment occupé par la distance DCD, ou $\overline{DCD}^2$.

Les sous-mémoires SM3 à SM15 sont reliées en sortie respectivement à des ports d'entrée F3 à F15 de la matrice $MRS_C$. La sous-mémoire SM0 est reliée en sortie à un port d'entrée F0 de la matrice $MRS_C$ à travers l'additionneur ADD1 dont la fonction est précisée par la suite.

La matrice de rotation de sortie $MRS_C$ réalise une conversion paragonale inverse. Des entrées de commande de rotation de la matrice $MRS_C$ sont reliées à un bus de séquencement $\overline{E}_C$ convoyant les adresses de multiplex AM="1111" à "0000" dans un ordre inverse par rapport au bus $E_C$. La matrice $MRS_C$ réalise un cycle de 15 à 0 permutations circulaires. Les paquets sont reçus sous forme diagonale aux ports d'entrée F0 à F15 et sont délivrés sous forme parallèle par groupes de 18 bits par J=16 ports de sortie G0 à G15. Les ports de sortie G0 à G15 sont

connectés à des ports d'entrée de J=16 convertisseurs parallèle/série P/S0 à P/S15 associés respectivement aux J=16 multiplex sortants MS0 à MS15.

Le circuit de commande $CC_C$ comprend un additionneur ADD2, une porte OU à deux entrées UO, un décodeur DCR, J=16 portes OU à deux entrées UO0 à UO15, et un circuit de files d'adresses de lecture $FL_C$.

Des premières entrées de l'additionneur ADD2 sont connectées au bus de séquencement $E_C$ et reçoivent une adresse $AM_E$ du multiplex d'où provient le paquet entrant. Des secondes entrées de l'additionneur ADD2 sont connectées au port D0 de la matrice $MRE_C$ et reçoivent la distance DES="0000000" dans le cas d'un paquet d'appel PA entrant et la distance $\overline{DES}^2$ dans le cas d'un paquet de données PD entrant. L'additionneur ADD2 délivre donc en sortie l'adresse $AM_E$ dans le cas d'un paquet entrant PA et la valeur $\overline{DES}^2+AM_E$ dans le cas d'un paquet entrant PD. Cette adresse $AM_E$ ou valeur $\overline{DES}^2+AM_E$ est fournie en entrée au décodeur DCR, et aux entrées de la sous-mémoire tampon SM0 pour être mémorisée parallèlement aux autres bits de paquets fournis par le port D0 de la matrice $MRE_C$ dans un champ correspondant à la distance DES ou $\overline{DES}^2$ dans une cellule de la sous-mémoire SM0.

La porte UO reçoit à des première et seconde entrées respectivement les bits BPA et $\overline{D}/A$ fournis par le port D0 de la matrice $MRE_C$ et délivre en sortie le bit $\overline{D}/A$ forcé à l'état "1" dans le cas d'un paquet entrant PA. Le bit BPA et le bit $\overline{D}/A$ délivré par la porte UO sont appliqués en entrée de la sous-mémoire tampon SM0 pour y être mémorisés parallèlement aux autres bits de paquet.

Le bit BPA est également appliqué à des premières entrées des portes UO0 à UO15. Seize sorties 0 à 15 du décodeur DCR sont reliées respectivement à des secondes entrées des portes UO0 à UO15. Le décodeur DCR reçoit en entrée l'adresse $AM_E$ ou la valeur $\overline{DES}^2+AM_E$ fournie par l'additionneur ADD2. Les portes UO0 à UO15 délivrent en sortie des signaux de commande d'aiguillage CD0 à CD15.

Le circuit de files d'adresses de lecture $FL_C$ comprend J=16 files d'adresses de lecture FL00 à FL15 et un multiplexeur MUX2. Les files FL00 à FL15 reçoivent en entrée parallèlement l'adresse d'écriture $AE_C$ et le bit BPA. Les signaux CD0 à CD15 fournis par les portes UO0 à UO15 sont appliqués respectivement à des entrées de commande de chargement des files FLO0 à FLO15. Des ports de sortie des files FL00 à FL15 sont reliés respectivement à J=16 ports d'entrée correspondants du multiplexeur MUX2. Le multiplexeur MUX2 comprend des entrées de commande connectées au bus $\overline{E}_C$ et recevant les adresses de multiplex AM="1111" à "0000". Le multiplexeur MUX2 délivre en sortie l'adresse de lecture $AL_C$ et le bit BPA fournis à la mémoire tampon de paquets $MP_C$.

Lorsque le paquet entrant est un paquet d'appel PA, le bit BPA="1" appliqué aux premières entrées des portes UO0 à UO15 force tous les signaux de commande d'aiguillage CD0 à CD15 à l'état actif "1" et l'adresse $AE_C$ est chargée dans toutes les files FL00 à FL15. Le paquet entrant PA est donc après lecture dans la mémoire $MP_C$ transmis vers les J=16 multiplex sortants MS0 à MS15 pour être diffusé vers les J=16 chaînes A0 à A15, avec chacun une distance DES incluse dans le mot M0 représentative de la différence entre l'adresse $AM_E$ du multiplex entrant et l'adresse $AM_S$ du multiplex sortant, cette différence constituant une adresse relative du multiplex sortant $AM_S$ par rapport à l'adresse du multiplex entrant $AM_E$.

En effet, pour un paquet PA en cours de lecture la sous-mémoire tampon SM0 délivre à des premières entrées de l'additionneur ADD1, l'adresse $AM_E$ mémorisée dans la sous-mémoire SM0 à l'écriture du paquet PA, et à des secondes entrées une adresse du multiplex sortant $AM_S$ en complément à 2, soit $\overline{AM^2}_S$. Un circuit de complémentation à 2, CC2, est prévu pour complémenter l'adresse $AM_S$ présente dans le bus $\overline{E}_C$. L'additionneur ADD1 délivre donc en sortie la distance $DES=AM_E+\overline{AM^2}_S=AM_E-AM_S$. La distance $DES=AM_E-AM_S$ est appliquée au port d'entrée FO de la matrice $MRS_C$.

Lorsque le paquet entrant est un paquet de données PD, le décodeur DCR délivre en sortie la valeur $\overline{DES^2}+AM_E = -(AM_E-AM_S)+AM_E=AM_S$ égale donc à l'adresse du multiplex sortant vers lequel doit être commuté le paquet PD. Le décodeur DCR active à l'état "1" une unique sortie correspondant à la valeur de l'adresse $AM_S$. Les portes UO0 à UO15 étant ouvertes par le bit BPA="0", la sortie à l'état "1" du décodeur DCR active à l'état "1" le signal de commande d'aiguillage correspondant et l'adresse d'écriture $AE_C$ du paquet PD dans la mémoire tampon $MP_C$ est chargée dans la file d'adresse de lecture correspondant à la valeur de l'adresse $AM_S$. A la lecture du paquet PD dans la mémoire tampon $MP_C$, la sous-mémoire SM0 applique l'adresse $\overline{DES^2}+AM_E=AM_S$ aux premières entrées de l'additionneur ADD1 et l'adresse complémentée $\overline{AM^2}_S$ est appliquée aux secondes entrées par le circuit CC2. L'additionneur ADD1 délivre alors en sortie la valeur $AM_S+\overline{AM^2}$ ="0000". Le sous-champ ch1 du paquet PD attribué à la distance $\overline{DES^2}$ est ainsi initialisée à zéro après la commutation du paquet PD par le commutateur central.

## Revendications

1. Procédé pour acheminer des paquets entre des premier et second multiplex bidirectionnels de raccordement (Mr, Tdr ; Mr, Tdé) connectés à un réseau de commutation temporel de paquets, ledit réseau comprenant une pluralité de commutateurs (N0 à N127) connectés en chaîne pour former une artère de transmission bidirectionnelle de paquets, chaque commutateur ($N_i$) connectant à l'artère un multiplex bidirectionnel de raccordement (Mr), caractérisé en ce que pendant une phase d'appel préliminaire à la transmission de paquets de données (PD), les premier et second multiplex de raccordement (Mr, Tdr ; Mr, Tdé) transmettent dans l'artère respectivement des premier et second paquets d'appel (PA1, PA2) qui sont diffusés vers tous les multiplex de raccordement (Mr) afin de mesurer respectivement des première et seconde distances (D(dr-dé), D(dé-dr)) séparant les commutateurs ($N_p$, $N_q$) connectant les premier et second multiplex (Mr, Tdr ; Mr, Tdé) à l'artère, les première et seconde distance (D(dr-dé), D(dé-dr)) représentant respectivement le nombre de commutateurs (q+p+1=5) que doit traverser un paquet (PD) transmis par le premier multiplex de raccordement (Mr, Tdr) pour atteindre le second multiplex de raccordement (Mr, Tdé) et le nombre de commutateurs (J-(q-p)+1=125) que doit traverser un paquet (PD) transmis par le second multiplex de raccordement (Mr, Tdé) pour atteindre le premier multiplex de raccordement (Mr, Tdr) et un paquet d'appel (PA1, PA2) incluant un mot de distance initialement à zéro à la transmission du paquet (PA1, PA2) et qui est incrémenté de 1 par chaque commutateur traversé ($N_i$) afin de mesurer la distance correspondante (D(dr-dé), D(dé-dr)), et en ce que pendant une phase de communication durant laquelle sont transmis les paquets de données (PD), des mots de distance représentant les première et seconde distances mesurées (D(dr-dé), D(dé-dr)) sont inclus dans les paquets de données (PD) transmis du premier (Mr, Tdr) vers le second (Mr, Tdé) multiplex de raccordement et réciproquement afin d'acheminer lesdits paquets de données (PD), le mot de distance (D) inclus dans un paquet de données (PD) étant décrémenté de 1 à chaque fois que le paquet (PD) traverse un commutateur ($N_i$) de telle sorte que lorsque le paquet (PD) atteint le commutateur ($N_q$) auquel est connecté le multiplex de raccordement destinataire du paquet (Mr, Tdé) le mot de distance (D) inclus dans le paquet (PD) a une valeur nulle ("0000000") indiquant au commutateur ($N_q$) que le paquet (PD) est à commuter vers le multiplex de raccordement qui lui est connecté (Mr, Tdé).

2. Réseau de commutation temporel de paquets pour la mise en oeuvre du procédé conforme à la revendication 1, dans lequel I commutateurs , où I est un entier quelconque, sont connectés en chaîne pour former une artère bidirectionnelle de transmission de paquets, chaque commutateur ($N_i$) connectant à l'artère un multiplex bidirectionnel de raccordement (Mr), caractérisé en ce qu'un

commutateur ($N_i$) comprend :

des moyens d'entrée ($CSA_N$) pour détecter des paquets entrants (PA, PD) dans 3 multiplex entrants (E0, E1, E2) et les transmettre en synchronisme,

des moyens ($MRE_N$) reliés aux moyens d'entrée ($CSA_N$) pour multiplexer les paquets (PA, PD) transmis par les moyens d'entrée,

une mémoire tampon ($MP_N$) pour mémoriser temporairement les paquets (PA, PD),

des moyens ($MRS_N$) pour démultiplexer les paquets (PA, PD) lus cycliquement dans la mémoire tampon ($MP_N$) et les transmettre vers 3 multiplex sortants (S0, S1, S2),

et des moyens ($CC_N$) pour traiter le mot de distance (D) inclus dans chaque paquet entrant (PA, PD) et pour commuter le paquet entrant en fonction d'un premier bit de signalisation (BS) inclus dans le paquet et indiquant un sens de transmission du paquet dans l'artère en chaîne, de la nature du paquet, paquet d'appel (PA) ou paquet de données (PD), et de la valeur du mot de distance (D) inclus dans le paquet (PA, PD).

3. Réseau de commutation temporel de paquets conforme à la revendication 2, caractérisé en ce que les moyens pour multiplexer comprennent des moyens ($MRE_N$) pour réaliser une conversion paragonale des paquets entrants (PA, PD) détectés transmis par les moyens d'entrée ($CSA_N$), et en ce que les moyens pour démultiplexer et transmettre comprennent des moyens ($MRS_N$) pour réaliser une conversion paragonale des paquets (PA, PD) lus dans la mémoire tampon ($MP_N$) inverse de la conversion paragonale dans les moyens pour multiplexer.

4. Réseau de commutation temporel de paquets conforme à la revendication 2 ou 3, caractérisé en ce que les moyens pour traiter et commuter ($CC_N$) comprennent :

des moyens (BPA ; ET0, ET4, ET5 à ET10) pour détecter si le paquet entrant est un paquet d'appel (PA) ou un paquet de données (PD),

des moyens (ET0, RG, CP, ET4) mémorisant un numéro d'identification (NI) compris dans les paquets d'appel (PA) transmis dans l'artère par le multiplex de raccordement (Mr) connecté au commutateur ($N_i$) et comparant ledit numéro à un numéro d'identification (NI) de source inclus dans un paquet d'appel entrant (PA) parcourant l'artère en chaîne pour détecter si le paquet d'appel (PA) a accompli un tour de l'artère en chaîne et pour l'éliminer dans l'affirmative,

des moyens (AD) pour incrémenter de 1 le mot de distance (D) inclus dans un paquet d'appel entrant (PA),

des premiers moyens de commande (CPA ; LAA, Fig. 5) activés (BPA="1") lorsque le paquet entrant est un paquet d'appel (PA) pour commander la commutation dudit paquet (PA) en fonction du premier bit de signalisation (BS) inclus dans le paquet (PA) et indiquant le sens selon lequel le paquet doit parcourir l'artère en chaîne,

des moyens (AD) pour décrémenter de 1 le mot de distance (D) inclus dans un paquet de données entrant (PD),

des moyens (OU3) pour détecter lorsque le mot de distance décrémenté du paquet de données entrant (PD) à une valeur nulle ($\overline{ZE}$="0"),

des seconds moyens de commande (CCE) activés (BPA="0") lorsque le paquet entrant est un paquet de données (PD) pour commander la commutation dudit paquet (PD) en fonction du premier bit de signalisation (BS) inclus dans le paquet (PD) et de la valeur détectée (D≠"0000000" ou D="0000000") du mot de distance décrémenté, et

trois moyens (FL0, FL1, FL2) respectivement associés aux 3 multiplex sortants (S0, S1, S2) pour mémoriser des adresses d'écriture ($AE_N$) des paquets (PA, PD) dans ladite mémoire tampon ($MP_N$) par ordre chronologique et sous la commande desdits premiers et seconds moyens de commande, lesdites adresses ($AE_N$) étant lues cycliquement sous la commande d'une base de temps ($BT_N$) pour produire des adresses de lecture ($AL_N$) de paquets sortants (PA, PD) fournies à la mémoire tampon ($MP_N$).

5. Réseau de commutation temporel de paquets conforme à la revendication 2 ou 3, caractérisé en ce que le mot de distance (D) inclus dans un paquet de données (PD) est en complément à 2($\overline{D}^2$) et représente la distance correspondante mesurée lors de la phase d'appel, et en ce que les moyens pour traiter et commuter ($CC_N$) comprennent :

des moyens (BPA ; ET0, ET4, IN0, ET5 à ET10) pour détecter si le paquet entrant est un paquet d'appel (PA) ou un paquet de données (PD),

des moyens (AD) pour incrémenter de 1 le mot de distance (D, $\overline{D}^2$) inclus dans le paquet entrant (PA, PD),

des moyens (OU3) pour détecter lorsque le mot de distance (D, $\overline{D}^2$) incrémenté du paquet entrant (PA, PD) a une valeur nulle ($\overline{ZE}$="0"),

des moyens (BPA ; ET0, ET4, ET5 à ET10) pour détecter si le paquet entrant est un paquet d'appel (PA) ou un paquet de données (PD),

des premiers moyens (ET0, RG, CP, ET4) mémorisant un numéro d'identification (NI) compris dans les paquets d'appel (PA) transmis dans l'artère par le multiplex de raccordement (Mr) connecté au commutateur (N$_i$) et comparant ledit numéro à un numéro d'identification (NI) de source inclus dans un paquet d'appel entrant (PA) parcourant l'artère en chaîne pour détecter si le paquet (PA) a accompli un tout d'artère en chaîne et pour l'éliminer dans l'affirmative,

des seconds moyens (OU3, ET4) pour éliminer un paquet d'appel entrant parcourant l'artère en chaîne lorsque la valeur détectée du mot de distance incrémenté est nulle ($\overline{ZE}$="0"),

des premiers moyens de commande (CPA ; LAA, Fig. 5) activés (BPA="1") lorsque le paquet entrant est un paquet d'appel (PA) pour commander la commutation dudit paquet (PA) en fonction du premier bit de signalisation (BS) inclus dans le paquet (PA) et indiquant le sens selon lequel le paquet doit parcourir l'artère en chaîne,

des seconds moyens de commande (CCE) activés (BPA="0") lorsque le paquet entrant est un paquet de données (PD) pour commander la commutation dudit paquet (PD) en fonction du premier bit de signalisation (BS) inclus dans le paquet (PD) et de la valeur détectée (D≠"0000000" ou D="0000000") du mot de distance décrémenté, et

trois moyens (FL0, FL1, FL2) respectivement associés aux 3 multiplex sortants (S0, S1, S2) pour mémoriser des adresses d'écriture (AE$_N$) des paquets (PA, PD) dans ladite mémoire tampon (MP$_N$) par ordre chronologique et sous la commande desdits premiers et seconds moyens de commande, lesdites adresses (AE$_N$) étant lues cycliquement sous la commande d'une base de temps (BT$_N$) pour produire des adresses de lecture (AL$_N$) de paquets sortants (PA, PD) fournies à la mémoire tampon (MP$_N$).

6. Réseau de commutation temporel de paquets comprenant J sous-réseaux en chaîne (A0 à A15), où J est un entier quelconque, et un premier commutateur central (CT1) auquel sont reliés chacun des sous-réseaux (A0 à A15) par un multiplex bidirectionnel de raccordement (Mr), caractérisé en ce que lesdits sous-réseaux (A0 à A15) sont des réseaux conformes aux revendications 2 à 5 dans lesquels les paquets d'appel (PA1, PA2) transmis par des premier (Mr, Tdr) et second (Mr, Tdé) multiplex de raccordement connectés respectivement à des commutateurs (Ndr, Ndé) de premier (Ad) et second (Aa) sous-réseaux sont diffusés à travers le premier commutateur central (CT1) vers tous les multiplex de raccordement (Mr) et comprennent des premier (DCD), second (DCA) et troisième (DES) mots de distance pour mesurer respectivement des distances (DCD, DCA) dans le premier sous-réseau (Ad), dans le second sous-réseau (Aa), et une adresse relative (DES=AM$_E$-AM$_S$) représentative de la commutation réalisée par le premier commutateur central (CT1), lesdites distances (DCD, DCA) et adresse (DES=AM$_E$-AM$_S$) étant incluses sous la forme de mots de distance (DCD, DCA, DES) dans les paquets de données (PD) pour l'acheminement desdits paquets (PD) pendant la phase de communication à travers le premier commutateur central (CT1) entre les premier et second multiplex de raccordement (Mr, Tdr ; Mr, Tdé).

7. Réseau de commutation temporel de paquets conforme à la revendication 6, caractérisé en ce que les moyens pour traiter et commuter (CC$_N$) compris dans un commutateur quelconque (N$_i$) d'un sous-réseau (A$_j$) comprennent des premiers moyens supplémentaires (CPA ; LAA, Figs. 10 et 11) activés (BPA="1") lorsque le paquet entrant est un paquet d'appel (PA) pour commander la commutation dudit paquet (PA) également en fonction d'un second bit de signalisation ($\overline{D}$/A) inclus dans le paquet (PA) et indiquant si le paquet (PA, $\overline{D}$/A="0") est à transmettre vers le premier commutateur central (CT1) pour être diffusés vers tous les sous-réseaux (A0 à A15) ou si le paquet (PA, $\overline{D}$/A="1") provient du premier commutateur central (CT1) et est à diffuser vers les multiplex de raccordement (Mr) connectés au sous-réseau (A$_j$).

8. Réseau de commutation temporel de paquets conforme à la revendication 7, caractérisé en ce que le premier commutateur central (CT1) comprend :

des moyens d'entrée (CSA$_C$) pour détecter des paquets entrants (PA, PD) dans J multiplex entrants (ME0 à ME15) reliés respectivement aux J sous-réseaux (A0 à A15) et les transmettre en synchronisme,

des moyens (MRE$_C$) reliés aux moyens d'entrée (CSA$_C$) pour multiplexer les paquets (PA, PD) transmis par les moyens d'entrée (CSA$_C$),

une mémoire tampon (MP$_C$) pour mémoriser temporairement les paquets (PA, PD),

des moyens (MRS$_C$) pour démultiplexer les paquets (PA, PD) lus cycliquement dans la mémoire tampon (MP$_C$) et les transmettre dans J multiplex sortants (MS0 à MS15) reliés respectivement aux J sous-réseaux (A0 à A15),

des moyens (CC$_C$) pour traiter le second bit de signalisation ($\overline{D}$/A) et le mot de distance (DES) correspondant au premier commutateur central (CT1) inclus dans chaque paquet entrant (PA, PD) en fonction de la nature du paquet, paquet d'appel (PA) ou de données (PD), et pour commuter le paquet (PA, PD) en fonction de sa nature (PA ou PD) et de la valeur du mot de distance (DES).

9. Réseau de commutation temporel de paquets conforme à la revendication 8, caractérisé en ce que les moyens pour multiplexer compris dans le premier commutateur central comprennent des moyens (MRE$_C$) pour réaliser une conversion paragonale des paquets entrants détectés transmis par les moyens d'entrée (CSA$_C$), et en ce que les moyens pour démultiplexer et transmettre comprennent des moyens pour réaliser (MRS$_C$) une conversion paragonale des paquets lus dans la mémoire tampon inverse da la conversion paragonale dans les moyens pour multiplexer.

10. Réseau de commutation temporel de paquets conforme à la revendication 8 ou 9, caractérise en ce que les moyens pour traiter et commuter (CC$_C$) compris dans le premier commutateur central (CT1) comprennent :

des moyens (BPA ; UO, UO0 à U015) pour détecter si le paquet entrant est un paquet d'appel (PA) ou un paquet de données (PD),

des moyens (UO) pour forcer le second bit de signalisation ($\overline{D}$/A) d'un paquet d'appel entrant (PA) à un état prédéterminé ($\overline{D}$/A="1"), ledit état ("1") indiquant aux commutateurs (N$_i$) des sous-réseaux que ce paquet d'appel (PA) est un paquet à diffuser (PA, $\overline{D}$/A="1") provenant du premier commutateur central (CT1),

des premiers moyens de commande (UO0 à UO15) activés (BPA="1") lorsque le paquet entrant est un paquet d'appel (PA) pour commander la commutation dudit paquet (PA) vers les J multiplex sortants (MS0 à MS15) afin de diffuser J paquets d'appel dérivés du paquet d'appel entrant (PA) respectivement vers les J sous-réseaux (A0 à A15),

des moyens (ADD1, CC2 ; ADD2) pour attribuer au mot de distance (DES) à chacun des J paquets d'appel à diffuser dérivés du paquet d'appel entrant (PA) une valeur représentant une adresse relative (AM$_E$-AM$_S$) du multiplex sortant vers lequel est commuté le paquet, relativement à une adresse absolue (AM$_E$) du multiplex entrant d'où provient le paquet d'appel entrant (PA),

des seconds moyens de commande (DCR, UO0 à UO15) activés (BPA="0") lorsque le paquet entrant est un paquet de données (PD) pour déduire une adresse absolue (AM$_S$) du multiplex sortant vers lequel ledit paquet (PD) est à commuter à partir du mot de distance (DES) inclus dans le paquet (PD) et représentant l'adresse relative (AM$_E$-AM$_S$) dudit multiplex sortant et de l'adresse absolue (AM$_E$) du multiplex entrant d'où provient le paquet (PD), et pour commander la commutation du paquet (PD) à partir de ladite adresse absolue (AM$_S$) du multiplex sortant, et

J moyens (FL00 à FL15) respectivement associés aux J multiplex sortants (MS0 à MS15) pour mémoriser des adresses d'écriture (AE$_C$) des paquets (PA, PD) dans ladite mémoire tampon (MP$_C$) par ordre chronologique et sous la commande desdits premier et second moyens de commande (DCR et UO0 à UO15), lesdites adresses (AE$_C$) étant lues cycliquement sous la commande d'une base de temps (BT$_C$) pour produire des adresses de lecture (AL$_C$) de paquets sortants (PA, PD) fournies à la mémoire tampon (MP$_C$).

11. Réseau de commutation temporel de paquets conforme à l'une quelconque des revendications 6 à 10, caractérisé en ce que le mot de distance (DES) correspondant au premier commutateur central (CT1) inclus dans un paquet de données (PD) est en complément à 2 ($\overline{DES}^2$) et représente l'adresse relative correspondante mesurée lors de la phase d'appel (AM$_E$-AM$_S$).

12. Réseau de commutation temporel de paquets conforme à l'une quelconque des revendications 6 à 11, caractérisé en ce que le premier commutateur central (CT1) comprend des moyens (MUX1) pour inclure un numéro d'identification (NI) respectivement attribué audit premier commutateur (CT1) dans chacun des paquets d'appel diffusés.

13. Réseau de commutation temporel de paquets conforme à l'une quelconque des revendications 6 à 12, caractérisé en ce qu'il comprend un second commutateur central (CT2) analogue au premier commutateur central (CT1) et relié également à chacun des J sous-réseaux (A0 à A15) pour commuter les paquets de données (PD) en partage de charge avec le premier commutateur central (CT1).

**Patentansprüche**

1. Leitweglenkungsverfahren zur Paketvermittlung zwischen einem ersten und einem zweiten bidirektionalen Multiplexanschluß (Mr, Tdr; Mr, Tdé), verbunden mit einem zeitlichen Paketvermittlungsnetzwerk, umfassend eine Vielzahl von Vermittlungsknoten (N0 bis N127), die kettenförmig miteinander verbunden sind, um einen bidirektionalen Leitweg zur Paketvermittlung zu bilden, wobei jeder Vermittlungsknoten (N$_i$) einen bidirektionalen Multiplexanschluß (Mr) mit dem Leitweg verbindet, dadurch gekennzeichnet, daß während einer der Übertragung von Datenpaketen (PD) vorausgehenden Aufrufphase der erste beziehungsweise zweite Multiplexanschluß (Mr, Tdr; Mr, Tdé) im Leitweg erste beziehungsweise zweite Aufrufpakete (PA1, PA2) überträgt, die zu allen Multiplexanschlüssen (Mr) übermittelt werden, um die erste beziehungsweise zweite Distanz (D(dr-dé), D(dé-dr)) zwischen den Vermittlungsknoten ($N_p$, $N_q$) zu messen, die den ersten und zweiten Multiplexanschluß (Mr, Tdr; Mr, Tdé) mit dem Leitweg verbinden, wobei die erste beziehungsweise zweite Distanz (D(dr-dé), D(dé-dr)) für die Anzahl der Vermittlungsknoten (q+p+1=5) steht, die ein vom ersten Multiplexanschluß (Mr, Tdr) überiragenes Paket (PD) durchlaufen muß, um den zweiten Multiplexanschluß (Mr, Tdé) zu erreichen, beziehungsweise für die Anzahl der Vermittlungsknoten (J-(q-p)+1=125), die ein vom zweiten Multiplexanschluß (Mr, Tdé) übertragenes Paket (PD) passieren muß, um zum ersten Multiplexanschluß (Mr, Tdr) zu gelangen, und ein Aufrufpaket (PA1, PA2) ein Wort enthält, das die Distanz ausdrückt, welche zu Beginn der Übertragung der Pakete (PA1, PA2) null ist und von jedem passierten Vermittlungsknoten ($N_i$) um 1 inkrementiert wird, um die entsprechende Distanz (D(dr-dé), D(dé-dr)) zu messen, und weiter dadurch gekennzeichnet, daß während einer Kommunikationsphase, in der die Datenpakete (PD) übertragen werden, Distanzwörter, die die gemessene erste und zweite Distanz (D(dr-dé), D(dé-dr)) ausdrücken, in den vom ersten (Mr, Tdr) zum zweiten (Mr, Tdé) Multiplexanschluß und umgekehrt übertragenen Datenpaketen (PD) enthalten sind, um diese Datenpakete (PD) zu leiten, wobei das in einem Datenpaket (PD) enthaltene, die Distanz (D) ausdrückende Wort jedesmal um 1 dekrementiert wird, wenn das Paket (PD) einen Vermittlungsknoten passiert, so daß das in dem Paket (PD) enthaltene, die Distanz (D) ausdrückende Wort dann, wenn das Paket (PD) den Vermittlungsknoten ($N_q$) erreicht, mit dem der Empfänger-Multiplexanschluß des Pakets (Mr, Tdé) verbunden ist, den Wert Null ("0000000") hat, der dem Vermittlungsknoten ($N_q$) anzeigt, daß das Paket (PD) zu dem mit ihm verbundenen Multiplexanschluß (Mr, Tdé) zu übertragen ist.

2. Zeitliches Paketvermittlungsnetzwerk zur Durchführung des Verfahrens nach Anspruch 1, in dem I Vermittlungsknoten kettenförmig miteinander verbunden sind, wobei I eine beliebige ganze Zahl ist, um einen bidirektionalen Paketvermittlungsleitweg zu bilden, bei dem jeder Vermittlungsknoten ($N_i$) einen bidirektionalen Multiplexanschluß (Mr) mit dem Leitweg verbindet, dadurch gekennzeichnet, daß ein Vermittlungsknoten ($N_i$) umfaßt:
Eingangsmittel ($CSA_N$), um eingehende Pakete (PA, PD) in 3 Eingangsmultiplexanschlüssen (E0, E1, E2) zu ermitteln und sie synchron zu übertragen,
mit den Eingangsmitteln ($CSA_N$) verbundene Mittel ($MRE_N$), um die durch die Eingangsmittel übertragenen Pakete (PA, PD) zu multiplexen,
einen Pufferspeicher ($MP_N$) zum Zwischenspeichern der Pakete (PA, PD),
Mittel ($MRS_N$), um die im Pufferspeicher ($MP_N$) zyklisch abgefragten Pakete (PA, PD) zu demultiplexen und sie zu 3 Multiplexausgängen (S0, S1, S2) zu übertragen,
und Mittel ($CC_N$), um das in jedem eingehenden Paket (PA, PD) enthaltene, die Distanz (D) ausdrückende Wort zu verarbeiten und das eingehende Paket in Abhängigkeit von einem ersten Signalbit (BS), das im Paket enthalten ist und die Übertragungsrichtung des Pakets in dem kettenförmigen Leitweg angibt, von der Art des Pakets - Aufrufpaket (PA) oder Datenpaket (PD) - und vom Wert des im Paket (PA, PD) enthaltenen Wortes der Distanz (D) zu übertragen.

3. Zeitliches Paketvermittlungsnetzwerk nach Anspruch 2, dadurch gekennzeichnet, daß die Mittel zum Multiplexen Mittel ($MRE_N$) zur paragonalen Umwandlung der ermittelten, von den Eingangsmitteln ($CSA_N$) übertragenen eingehenden Pakete (PA, PD) umfassen und die Mittel zum Demultiplexen und Übertragen Mittel ($MRS_N$) umfassen, um eine paragonale Umwandlung der im Pufferspeicher ($MP_N$) abgefragten Pakete (PA, PD) umgekehrt zu der paragonalen Umwandlung in den Mitteln zum Multiplexen durchzuführen.

4. Zeitliches Paketvermittlungsnetzwerk nach Anspruch 2 oder 3, dadurch gekennzeichnet, daß die Mittel zur Verarbeitung und Vermittlung ($CC_N$) umfassen:
Mittel (BPA; ET0, ET4, ET5 bis ET10) um festzustellen, ob das eingehende Paket ein Aufrufpaket (PA) oder ein Datenpaket (PD) ist,
Mittel (ET0, RG, CP, ET4), die eine Kenn-Nummer (NI), enthalten in den im Leitweg durch den mit dem Vermittlungsknoten ($N_i$) verbundenen Multiplexanschluß (Mr) übertragenen Aufrufpaketen (PA), speichern'und mit einer Kenn-Nummer des Senders (NI), die in einem eingehenden, den kettenförmigen Leitweg durchlaufenden Aufrufpaket (PA) enthalten ist, vergleichen um festzustellen, ob das Aufrufpaket (PA) den kettenförmigen Leitweg bereits einmal zur Gänze durchlaufen hat und es zutreffendenfalls zu eliminieren,
Mittel (AD), um'das in einem eingehenden Aufrufpaket (PA) enthaltene, die Distanz (D) ausdrückende Wort um 1 zu inkrementieren,

erste Steuermittel (CPA; LAA, Fig. 5), die aktiviert (BPA="1") werden, wenn das eingehende Paket ein Aüfrufpaket (PA) ist, um die Vermittlung dieses Pakets (PA) in Abhängigkeit vom ersten Signalbit (BS), welches im Paket (PA) enthalten ist und die Richtung angibt, in der das Paket den kettenförmigen Leitweg durchlaufen muß, zu steuern,

Mittel (AD), um das in einem eingehenden Datenpaket (PD) enthaltene, die Distanz (D) ausdrückende Wort um 1 zu dekrementieren,

Mittel (OU3) um festzustellen, wann das dekrementierte Distanzwort des eingehenden Datenpakets (PD) den Wert Null hat ($\overline{ZE}$="0"),

zweite Steuermittel (CCE), die aktiviert (BPA="0") werden, wenn das eingehende Paket ein Datenpaket (PD) ist, um die Vermittlung dieses Pakets (PD) in Abhängigkeit von dem im Paket (PA) enthaltenen ersten Signalbit (BS) und vom festgestellten Wert (D$\neq$"0000000" oder D="0000000") des dekrementierten Distanzwortes zu steuern, und

drei mit drei Multiplexausgängen (S0, S1, S2) verbundene Mittel (FL0, FL1, FL2), um Schreibadressen (AE$_N$) der Pakete (PA, PD) im Pufferspeicher (MP$_N$) in chronologischer Reihenfolge und auf den Befehl des ersten und zweiten Steuermittels hin zu speichern, wobei die Adressen (AE$_N$) auf den Befehl einer Zeitbasis (BT$_N$) zyklisch abgefragt werden, um Leseadressen (AL$_N$) der dem Pufferspeicher (MP$_N$) gelieferten hinausgehenden Pakete (PA, PD) zu produzieren.

5. Zeitliches Paketvermittlungsnetzwerk nach Anspruch 2 oder 3, dadurch gekennzeichnet, daß das in einem Datenpaket (PD) enthaltene, die Distanz (D) ausdrückende Wort das Zweieikomplement (D²) ist und für die jeweils bei der Aufrufphase gemessene Distanz steht, und daß die Mittel zur Verarbeitung und Vermittlung (CC$_N$) umfassen:

Mittel (BPA; ET0, ET4, INO, ET5 bis ET10) um festzustellen, ob das eingehende Paket ein Aufrufpaket (PA) oder ein Datenpaket (PD) ist, Mittel (AD), um das in einem eingehenden Aufrufpaket (PA, PD) enthaltene, die Distanz (D, D²) ausdrückende Wort um 1 zu inkrementieren, Mittel (OU3) um festzustellen, wann das dekrementierte, die Distanz (D, $\overline{D}^2$) ausdrückende Wort des eingehenden Pakets (PA, PD) den Wert Null hat ($\overline{ZE}$="0"),

Mittel (BPA; ET0, ET4, ET5 bis ET10) um festzustellen, ob das eingehende Paket ein Aufrufpaket (PA) oder ein Datenpaket (PD) ist,

erste Mittel (ET0, RG, CP, ET4), die eine Kenn-Nummer (NI), enthalten in den im Leitweg durch den mit dem Vermittlungsknoten (N$_i$) verbundenen Multiplexanschluß (Mr) übertragenen Aufrufpaketen (PA), speichern und mit einer Kenn-Nummer des Senders (NI), die in einem eingehenden, den kettenförmigen Leitweg durchlaufenden Aufrufpaket (PA) enthalten ist, vergleichen, um festzustellen, ob das Paket (PA) den kettenförmigen Leitweg bereits einmal zur Gänze durchlaufen hat und es zutreffendenfalls zu eliminieren,

zweite Mittel (OU3, ET4), um ein eingehendes Aufrufpaket, das den kettenförmigen Leitweg durchläuft, zu eliminieren, wenn der festgestellte Wert des inkrementierten Distanzwortes null ist ($\overline{ZE}$="0"),

erste Steuermittel (CPA; LAA, Fig. 5), die aktiviert (BPA="1") werden, wenn das eingehende Paket ein Aufrufpaket (PA) ist, um die Vermittlung dieses Pakets (PA) in Abhängigkeit vom ersten Signalbit (BS), welches im Paket (PA) enthalten ist und die Richtung angibt, in der das Paket den kettenförmigen Leitweg durchlaufen soll, zu steuern,

zweite Steuermittel (CCE), die aktiviert (BPA="0") werden, wenn das eingehende Paket ein Datenpaket (PD) ist, um die Vermittlung dieses Pakets (PD) in Abhängigkeit vom ersten, im Paket (PA) enthaltenen Signalbii (BS) und vom festgestellten Wert (D$\neq$"0000000" oder D="0000000") des dekrementierten Distanzwortes zu steuern, und

drei jeweils mit drei Multiplexausgängen (S0, S1, S2) verbundene Mittel (FL0, FL1, FL2), um Schreibadressen (AE$_N$) der Pakete (PA, PD) im Pufferspeicher (MP$_N$) in chronologischer Reihenfolge und auf den Befehl des ersten und zweiten Steuermittels hin zu speichern, wobei die Adressen (AEu) auf den Befehl einer Zeitbasis (BT$_N$) zyklisch abgefragt werden, um Leseadressen (AL$_N$) der dem Pufferspeicher (MP$_N$) gelieferten hinausgehenden Pakete (PA, PD) zu produzieren.

6. Zeitliches Paketvermittlungsnetzwerk, umfassend J kettenförmige Teilnetzwerke (A0 bis A15), wobei J eine beliebige ganze Zahl ist, sowie einen ersten zentralen Vermittlungsknoten (CT1), mit dem jedes Teilnetzwerk (A0 bis A15) durch einen bidirektionalen Multiplexanschluß verbunden ist, dadurch gekennzeichnet, daß die Teilnetzwerke (A0 bis A15) Netzwerke nach den Ansprüchen 2 bis 5 sind, in denen die Aufrufpakete (PA1, PA2), die durch einen ersten (Mr, Tdr) beziehungsweise zweiten (Mr, Tdé) Multiplexanschluß, der mit Vermittlungsknoten (Ndr, Ndé) des ersten (Ad) beziehungsweise zweiten (Aa) Teilnetzwerks verbunden ist, übertragen werden, über den ersten zentralen Vermittlungsknoten (CT1) zu allen Multiplexanschlüssen (Mr) gesendet werden und erste (DCD), zweite (DCA) und dritte (DES) Distanzwörter enthalten, um die Distanzen (DCD, DCA) im ersten (Ad) und zweiten Teilnetzwerk (Aa) beziehungsweise eine relative Adresse (DES=$AM_E$-$AM_S$), die für die Vermittlung durch den ersten zentralen Vermittlungsknoten (CT1) repräsentativ ist, zu messen, wobei die Distanzen (DCD, DCA) und die Adresse (DES=$AM_E$-$AM_S$) in den Datenpaketen (PD) in Form von Distanzwörtern (DCD, DCA, DES) enthalten sind, um die Pakete (PD) in der Phase der Kommunikation über den ersten zentralen Vermittlungsknoten (CT1) zwischen erstem und zweitem Multiplexanschluß (Mr, Tdr; Mr,Tdé) zu lenken.

7. Zeitliches Paketvermittlungsnetzwerk nach Anspruch 6, dadurch gekennzeichnet, daß die in einem beliebigen Vermittlungsknoten ($N_i$) eines Teilnetzwerks ($A_j$) enthaltenen Mittel zur Verarbeitung und Vermittlung ($CC_N$) erste zusätzliche Mittel (CPA; LAA, Fig. 10 und 11) umfassen, die aktiviert (BPA="1") werden, wenn das eingehende Paket ein Aufrufpaket (PA) ist, um die Vermittlung dieses Pakets (PA) auch in Abhängigkeit von einem zweiten Signalbit ($\overline{D}$/A) zu steuern, das im Paket (PA) enthalten ist und anzeigt, ob das Paket (PA, $\overline{D}$/A="0") über den ersten zentralen Vermittlungsknoten (CT1) zu übertragen ist, um zu allen Teilnetzwerken (A0 bis A15) übermittelt zu werden, oder ob das Paket (PA, $\overline{D}$/A="1") vom ersten zentralen Vermittlungsknoten (CT1) kommt und zu den mit dem Teilnetzwerk ($A_j$) verbundenen Multiplexanschlüssen (Mr) zu übermitteln ist.

8. Zeitliches Paketvermittlungsnetzwerk nach Anspruch 7, dadurch gekennzeichnet, daß der erste zentrale Vermittlungsknoten (CT1) umfaßt:
Eingangsmittel ($CSA_C$), um eingehende Pakete (PA, PD) in J Eingangsmultiplexanschlüssen (ME0 bis M15), die jeweils mit J Teilnetzwerken (A0 bis A15) verbunden sind, zu ermitteln und sie synchron zu übertragen,
mit den Eingangsmitteln ($CSA_C$) verbundene Mittel ($MRE_C$), um die durch die Eingangsmittel ($CSA_C$) übertragenen Pakete (PA, PD) zu multiplexen,
einen Pufferspeicher ($MP_C$) zum Zwischenspeichern der Pakete (PA, PD),
Mittel ($MRS_C$), um die im Pufferspeicher ($MP_C$) zyklisch abgefragten Pakete (PA, PD) zu demultiplexen und sie in J mit jeweils J Teilnetzwerken (A0 bis A15) verbundenen Multiplexausgänge (MS0 bis MS15) zu übertragen,
Mittel ($CC_C$), um das zweite Signalbit ($\overline{D}$/A) und das dem ersten zentralen Vermittlungsknoten (CT1) entsprechende, in jedem eingehenden Paket (PA, PD) enthaltene Distanzwort (DES) in Abhängigkeit von der Art des Pakets - Aufruf- (PA) oder Datenpaket (PD) - zu verarbeiten und das Paket (PA; PD) je nach seiner Art (PA oder PD) und dem Wert des Distanzwortes (DES) zu übermitteln.

9. Zeitliches Paketvermittlungsnetzwerk nach Anspruch 8, dadurch gekennzeichnet, daß die im ersten zentralen Vermittlungsknoten enthaltenen Mittel zum Multiplexen Mittel ($MRE_C$) zur paragonalen Umwandlung der ermittelten, von den Eingangsmitteln ($CSA_C$) übertragenen eingehenden Pakete umfassen und die Mittel zum Demultiplexen und Übertragen Mittel ($MRS_C$) umfassen, um eine paragonale Umwandlung der im Pufferspeicher abgefragten Pakete umgekehrt zu der paragonalen Umwandlung in den Mitteln zum Multiplexen durchzuführen.

10. Zeitliches Paketvermittlungsnetzwerk nach Anspruch 8 oder 9, dadurch gekennzeichnet, daß die im ersten zentralen Vermittlungsknoten (CT1) enthaltenen Mittel zur Verarbeitung und Vermittlung ($CC_C$) umfassen:
Mittel (BPA; U0, U00 bis U15) um zu festzustellen, ob das eingehende Paket ein Aufrufpaket (PA) oder ein Datenpaket (PD) ist,
Mittel (U0), um das zweite Signalbit ($\overline{D}$/A=1") eines eingehenden Aufrufpakets (PA) mit einem im vorhinein festgelegten Zustand ($\overline{D}$/A="1") zu belegen, der den Vermittlungsknoten ($N_i$) der Teilnetzwerke anzeigt, daß es sich bei dem Aufrufpaket (PA) um ein zu vermittelndes Paket (PA, $\overline{D}$/A="1") handelt, das vom ersten zentralen Vermittlungsknoten (CT1) kommt,
erste Steuermittel (U00 bis U015), die aktiviert (BPA="1") werden, wenn das eingehende Paket ein Aufrufpaket (PA) ist, um die Vermittlung dieses Pakets (PA) zu den J Multiplexausgängen (MS0 bis MS15) zu steuern, um jeweils J vom eingehenden Aufrufpaket (PA) stammende Aufrufpakete zu den J Teilnetzwerken (A0 bis A15) zu übermitteln,
Mittel (ADD1, CC2; ADD2), um dem Distanzwort (DES) bei jedem der J zu übermittelnden und vom eingehenden Aufrufpaket (PA) stammenden Aufrufpakete einen Wert zuzuordnen, der eine relative Adresse ($AM_E$-$AM_S$) des Multiplexausgangs darstellt, zu dem das Paket vermittelt wird, im Vergleich zu einer absoluten Adresse ($AM_E$) des Eingangsmultiplexanschlusses, von dem das eingehende Aufrufpaket (PA) kommt,
zweite Steuermittel (DCR, U00 bis U015), die aktiviert (BPA="0") werden, wenn das eingehende Paket ein Datenpaket (PD) ist, um eine absolute Adresse ($AM_S$) des Multiplexausgangs abzuleiten, zu dem das Paket (PD) von dem in dem Paket (PD) enthaltenen Distanzwort (DES) weg vermittelt werden soll und die die relative Adresse ($AM_E$-$AM_S$) des Multiplexausgangs und der abso-

luten Adresse (AM$_E$) des Eingangsmultiplexanschlusses darstellt, von dem das Paket (PD) kommt, und um die Vermittlung des Pakets (PD) von der absoluten Adresse (AM$_S$) des Multiplexausgangs weg zu steuern, und
J Mittel (FL00 bis FL15), die jeweils mit J Multiplexausgängen (MS0 bis MS15) verbunden sind, um Schreibadressen (AE$_C$) der Pakete (PA, PD) im Pufferspeicher (MP$_C$) in chronologischer Reihenfolge und auf den Befehl der ersten und zweiten Befehlsmittel (DCR und U00 bis U015) zu speichern, wobei die Adressen (AE$_C$), gesteuert von Zeitbasis (BT$_C$), zyklisch abgefragt werden, um Leseadressen (AL$_C$) von hinausgehenden Paketen (PA, PD) zu produzieren, die dem Pufferspeicher (MP$_C$) geliefert werden.

11. Zeitliches Paketvermittlungsnetzwerk nach einem der Ansprüche 6 bis 10, dadurch gekennzeichnet, daß das dem ersten zentralen Vermittlungsknoten (CT1) entsprechende, in einem Datenpaket (PD) enthaltene Distanzwort (DES) das Komplement zu 2 ($\overline{DES^2}$) ist und jeweils die relative Adresse darstellt, die bei der Aufrufphase gemessen wird (AM$_E$-AM$_S$).

12. Zeitliches Paketvermittlungsnetzwerk nach einem der Ansprüche 6 bis 11, dadurch gekennzeichnet, daß der erste zentrale Vermittlungsknoten (CT1) Mittel (MUX1) zum Speichern einer Kenn-Nummer (NI) umfaßt, die in jedem der übermittelten Aufrufpakete jeweils dem ersten Vermittlungsknoten (CT1) übermittelt wird.

13. Zeitliches Paketvermittlungsnetzwerk nach einem der Ansprüche 6 bis 12, dadurch gekennzeichnet, daß dieses Netzwerk einen zweiten zentralen Vermittlungsknoten (CT2) umfaßt, der analog zum ersten zentralen Vermittlungsknoten (CT1) ausgeführt ist und ebenfalls mit jedem der J Teilnetzwerke (A0 bis A15) verbunden ist, um die Belastung bei der Vermittlung der Datenpakete (PD) mit dem ersten zentralen Vermittlungsknoten (CT1) zu teilen.

## Claims

1. Method for routing packets between first and second bidirectional connection multiplex ways (Mr, Tdr ; Mr, Tde) linked to a jacket time-division switching network, said network comprising a plurality of switches (N0 to N127) chain-connected to form a packet bidirectional transmission artery, each switch (N$_i$) connecting to the artery a bidirectional connection multiplex way (Mr), characterized in that, during a communication set-up phase preliminary to the data packet transmission (PD), the first and second connection multiplex ways (Mr,Tdr ; Mr, Tdé) transmit in the artery respectively first and second call packets (PA1,PA2) which are disseminated to all the connection multiplex ways (Mr) so as to me:sure respectively first and second distances (D(dr-dé), D(dé-dr) separating the switches (N$_p$ ,N$_q$) connecting the first and second multiplex ways (Mr,Tdr ; Mr,Tde) to the artery, the first and second distances (D(dr-dé),D(dé-dr) representing respectively the number of switches (q+p+1=5) to be crossed by a packet (PD) transmitted by the first connection multiplex way (Mr,Tdr) to reach the second connection multiplex way (Mr,Tdé) and the number of switches (J-(q-p)+1=125) to be crossed by a packet (PD) transmitted by the second connection multiplex way (Mr,Tdé) to reach the first correction multiplex way (Mr,Tdr), and a call packet (PA1,PA2) including a distance word initially to zero on the transmission of the packet (PA1,PA2) and which is incremented by 1 by each crossed switch (N$_i$), so as to measure the corresponding distance (D(dr-dé),D(dé-dr)), and in that during a communication phase in which the data packets (PD) are transmitted, distance words representing the first and second mesured distances (D(dr-dé),D(dé-dr) are included in the data packets (PD) transmitted from the first (Mr,Tdr) to the second (Mr,Tdé) connection multiplex way and vice-versa so as to route said data packets (PD), the distance word (D) included in a data packet (PD) being decremented by 1 whenever the packet (PD) is crossing a switch (N$_i$) such that when the packet (PD) reaches the switch (N$_q$) to which the connection multiplex way addressee of the packet (Mr,Tdé) is corrected, the distance word (D) included in the packet (PD) has a null value ("0000000") indicating to the switch (N$_q$) that the packet (PD) is to be switched to the connection multiplex way connected (Mr,Tdé) to it,

2. Packet time-division switching network for carrying out the method according to claim 1, in which I switches, where I is any integer, are chain-connected to form a packet transmission bidirectional artery, each switch (N$_i$) connecting to the artery a bidirectional connection multiplex way (Mr), characterized in that a switch (N$_i$) comprises :
     input means (CSA$_N$) for detecting incoming packets (PA,PD) in 3 input multiplex ways (E0,E1,E2) and transmitting them synchronously,
     means (MRE$_N$) linked to the input means (CSA$_N$) for multiplexing the packets (PA, PD) transmitted by the input means,
     a buffer memory (MP$_N$) for temporarily storing the packets (PA,PD),
     means (MRS$_N$,) for demultiplexing the packets (PA,PD) read cyclically in the buffer memory (MP$_N$) and transmitting them to 3 output multiplex ways (S0,S1,S2),

and means (CC$_N$) for processing the distance word (D) included in each incoming packet (PA,PD) and for switching the incoming packet as a fonction of a first signalling bit (BS) included in the packet and indicating a transmission direction of the packet in the chain artery, of the nature of the packet, call packet (PA) or data packet (PD), and of the value of the distance word (D) included in the packet (PA,PD).

3. Packet time-division switching network according to claim 2, characterized in that the multiplexing means comprise means (MRE$_N$) for carrying out a paragonal conversion of the detected incoming packets (PA,PD) transmitted by the input means (CSA$_N$), and in that the demultiplexing and transmitting means comprise means (MRS$_N$) for carrying out a paragonal conversion of the packets (PA,PD) read in the buffer memory (MP$_N$), reverse of the paragonal conversion in the multiplexing means.

4. Packet time-division switching network according to claim 2 or 3, characterized in that the processing and switching means (CC$_N$) comprise :

means (BPA ; ET0, ET4, ET5 to ET10) for detecting whether the incoming packet (PA) is a call packet (PA) or a data packet (PD),

means (ET0, RG, CP, ET4) storing an identification number (NI) included in the call packets (PA) transmitted in the artery by the connection multiplex way (Mr) connected to the switch (N$_i$) and comparing said number to a source identification number (NI) included in a incoming call packet (PA) crossing through the chain artery for detecting whether the incoming call packet (PA) has made a tour of the chain artery and for eliminating it if so,

means (AD) for incrementing by 1 the distance word (D) included in an incoming call packet (PA),

first controlling means (CPA ; LAA, Fig.5) activated (BPA ="1") when the incoming packet is a call packet (PA) for controlling the switching of said packet (PA) as a function of the first signalling bit (BS) included in the packet (PA) and indicating the direction along which the packet should cover the chain artery,

means (AD) for decrementing by 1 the distance word (D) included in an incoming data packet (PD),

means (OU3) for detecting when the decremented distance word of the incoming data packet (PD) has a null value ($\overline{ZE}$="0"),

second controlling means (CCE) activated (BPA="0") when the incoming packet is a data packet (PD) for controlling the switching of said packet (PD) as a function of the first signalling bit (BS) included in the packet (PD) and of the detected value (D≠"0000000" or D="0000000") of the decremented distance word, and

three means (FL0,FL1,FL2) respectively associated to the 3 output multiplex ways (S0,S1,S2) for storing write addresses (AE$_N$) of the packets (PA,PD) in said buffer memory (MP$_N$) in chronological order and under the control of said first and second controlling means, said addresses (AE$_N$) being read cyclically under the control of a time base (BT$_N$) to produce read addresses (AL$_N$) of outgoing packets (PA,PD) supplied to the buffer memory (MP$_{N)}$.

5. Packet time-division switching network according to claim 2 or 3, characterized in that the distance word (D) included in a data packet (PD) is in two's complement ($\overline{D}^2$) and represents the corresponding distance measured during the communication set-up phase, and in that the processing and switching means (CC$_N$) comprise :

means (BPA;ET0,ET4,IN0,ET5 to ET10) for detecting whether the incoming packet is a call packet (PA) or a data packet (PD),

means (AD) for incrementing by 1 the distance word (D,$\overline{D}^2$) included in the incoming packet (PA,PD),

means (OU3) for detecting when the incremented distance word (D,$\overline{D}^2$) of the incoming packet (PA,PD) has a null value ($\overline{ZE}$="0"),

means (BPA;ET0,ET4,ET5 to ET10) for detecting whether the incoming packet is a call packet (PA) or a data packet (PD),

first means (ET0,RG,CP,ET4) storing an identification number (NI) comprised in the call packet (PA) transmitted in the artery by the connection multiplex way (Mr) connected to the switch (N$_i$) and comparing said number to a source identification number (NI) included in an incoming call packet (PA) covering the chain artery for detecting whether the incoming packet (PA) has made a tour of the chain artery and for eliminating it if so,

second means (OU3,ET4) for eliminating an incoming call packet covering the chain artery when the value detected of the incremented distance word is null ($\overline{ZE}$ ="0"),

first controlling means (CPA;LAA,Fig.5) activated (BPA="1") when the incoming packet is a call packet (PA) for controlling the switching of said packet (PA) as a function of the first signalling bit (BS) included in the packet (PA) and indicating the direction along which the packet should cover the chain artery,

second controlling means (CEE) activated (BPA="0") when the incoming packet is a data packet (PD) for controlling the switching of said packet (PD) as a function of the first signalling bit (BS) included in the packet (PD) and the value detected (D≠"0000000" or D="0000000") of the decremented distance word, and ;

three means (FL0,FL1,FL2) respectively associated to the 3 output multiplex ways (S0,S1,S2) for storing write addresses ($AE_N$) of the packets (PA,PD) in said buffer memory ($MP_N$) in chronological order, and under the control of said first and second controlling means, said addresses ($AE_N$) being read cyclically under the control of a time base ($BT_N$) to produce read addresses ($AL_N$) of outgoing packets (PA,PD) supplied to the buffer memory ($MP_N$).

6. Packet time-division switching network comprising J chain sub-network (A0 to A15), where J is any integer, and a first central switch (CT1) to which are linked each of the sub-networks (A0 to A15) by a bidirectional connection multiplex way (Mr), characterized in that said sub-networks (A0 to A15) are networks according to claims 2 to 5 in which the call packets (PA1,PA2) transmitted by first (Mr,Tdr) and second (Mr,Tdé) connection multiplex ways connected respectively to switches (Ndr,Ndé) of first (Ad) and second (Aa) sub-networks are disseminated through the first central switch (CT1) to all the connection multiplex ways, and comprise first (DCD), second (DCA) and third (DES) distance words to measure respectively distances (DCD,DCA) in the first sub-network (Ad), in the second sub-network (Aa) and a relative address ($DES=AM_E-AM_S$) representative of the switching performed by the first central switch (CT1), said distances (DCD,DCA) and address ($DES=AM_E-AM_S$) being included in the form of distance words (DCD,DCA,DES) in the data packets (PD) for the routing of said packets (PD) during the communication phase through the first central switch (CT1) between the first and second connection multiplex ways (Mr,Tdr;Mr,Tdé).

7. Packet time-division switching network according to claim 6, characterized in that the means for processing and switching ($CC_N$) comprised in any switch ($N_i$) of a sub-network ($A_j$) comprise first supplementary means (CPA;LAA,Figs. 10 and 11) activated (BPA="1") when the incoming packet is a call packet (PA) for controlling the switching of said packet (PA) also as a function of a second signalling bit ($\overline{D}$/A) included in the packet (PA) and indicating whether the packet (PA,$\overline{D}$/A="0") is to be transmitted towards the first central switch (CT1) to be disseminated towards all the sub-networks (A0 to A15) or whether the packet

(PA,$\overline{D}$/A="1") proceed from the first central switch (CT1) and is to be disseminated towards the connection multiplex ways (Mr) connected to the sub-network ($A_j$).

8. Packet time-division switching network according to claim 7, characterized in that the first central switch (CT1) comprises :

input means ($CSA_C$) for detecting incoming packets (PA,PD) in J input multiplex ways (ME0 to ME15) linked respectively to the J sub-networks (A0 to A15) and transmitting them synchronously,

means ($MRE_C$) linked to input means ($CSA_C$) for multiplexing the packets (PA,PD) transmitted by the input means ($CSA_C$) ;

a buffer memory ($MP_C$) for temporarily storing the packets (PA,PD),

means ($MRS_C$) for demultiplexing the packets (PA,PD) read cyclically in the buffer memory ($MP_C$) and transmitting them in J output multiplex ways (MS0 to MS15) linked respectively to the J sub-networks (A0 to A15),

means ($CC_C$) for processing the second signalling bit ($\overline{D}$/A) and the distance word (DES) corresponding to the first central switch (CT1) included in each incoming packet (PA,PD) as a function of the nature of the packet, call (PA) or data packet (PD), and for switching the packet (PA,PD) as a function of its nature (PA or PD) and the value of the distance word (DES).

9. Packet time-division switching network according to claim 8, characterized in that the multiplexing means comprised in the first central switch comprise means ($MRE_C$) for carrying out a paragonal conversion of the incoming detected packets transmitted by the input means ($CSA_C$), and in that the demultiplexing and transmitting means comprise means for carrying ($MRS_C$) a paragonal conversion of the packets read in the buffer memory, reverse of the paragonal conversion in the means for multiplexing.

10. Packet time-division switching network according to claim 8 or 9, characterized in that the processing and switching means ($CC_C$) comprised in the first central switch (CT1) comprise :

means (BPA;U0,U00 to U015) for detecting whether the incoming packet (PA) is a call packet (PA) or a data packet (PD),

means (U0) for setting the second signalling bit ($\overline{D}$/A) of an incoming call packet (PA) to a predetermined state ($\overline{D}$/A = "1) , said state ("1") indicating to the switches ($N_i$) of the sub-networks that this call packet (PA) is a packet to be disseminated (PA,$\overline{D}$/A="1"), originating from the first central switch (CT1),

first controlling means (U00 to U015) activated (BPA="1) when the incoming packet is a call packet (PA) for controlling the switching of said packet (PA) to the J outgoing multiplex ways (MS0 to MS15) so as to disseminate J call packets derived from the incoming call packet (PA) respectively to the J sub-networks (A0 to A15),

means (ADD1,CC2;ADD2) for attributing to the distance word (DES) for each of the J call packets to be disseminated derived from the incoming call packet (PA), a value representing a relative address ($AM_E$ - $AM_S$) of the output multiplex way towards which the packet is switched, relatively to an absolute address ($AM_E$) of the input multiplex whence the incoming call packet (PA) originates,

second controlling means (DCR,UO0 to U015) activated (BPA="0") when the incoming packet is a data packet (PD) for deducing an absolute address ($AM_S$) of the output multiplex way towards which said packet (PD) is to be switched from the distance word (DES) included in the packet (PD) and representing the relative address ($AM_E$ - $AM_S$) of said output multiplex way, and from the absolute address ($AM_E$) of the incoming multiplex way whence the packet (PD) originates, and for controlling the switching of the packet (PD) from said absolute address ($AM_S$) of the output multiplex, and

J means (FL00 to FL15) respectively associated to the J output multiple ways (MS0 to MS15) for storing write addresses ($AE_C$) of the packets (PA,PD) in said buffer memory ($MP_C$), in chronological order and under the control of said first and second controlling means (DCR et U00 to U015), said addresses ($AE_C$) being read cyclically under the control of a time base ($BT_C$) to produce read addresses ($AL_C$) of output packets (PA,PD) supplied to the buffer memory ($MP_C$).

11. Packet time-division switching network according to any one of claims 6 to 10, characterized in that the distance word (DES) corresponding to the first central switch (CT1) included in a data packet (PD) is two's complemented ($\overline{DES}^2$) and represents the corresponding relative address measured during the communication set-up phase ($AM_E$ - $AM_S$).

12. Packet time-division switching network according to any one of claims 6 to 11, characterized in that the first central switch (CT1) comprises means (MUX1) for including an identification number (NI) respectively attributed to said first switch (CT1) in each of the disseminated call packets.

13. Packet time-division switching network according to any one of claims 6 to 12, characterized in that it comprises a second central switch (CT2) similar to the first central switch (CT1) and also linked to each of the J sub-networks (A0 to A15) for switching the data packets (PD) with load sharing with the first central switch (CT1).

FIG.1

## FIG.2

M0, M1, M2

BPA, BS, ch1, ch2 | ch1, ch2 | M2

"...." 4bits | NCV, 8 bits | D="0000000" 7bits | "......." 7bits | NI (Source)

M3, M4, M5

NI(destination), 12 bits | "............" 12 bits | "...." 4bits | D, 7 bits | "......." 7bits

ch1 ch2 ch3

18 bits

PA

## FIG.3

champ d'étiquette | champ d'information

BPA, BS, ch1, ch2, ch3, ch4

"...." 4bits | NCV, 8 bits | D², 7 bits | "......." 7bits | octet d'information

4 octets = 32 bits

octet d'information | octet d'information

32 octets = 256 bits

PD

## FIG.7

M0, M1, M2

BPA, BS, ch1, ch2 | ch1, ch2 | M2

DES="0000" | NCV | DCD="0000000" | DCA="0000000" | NI (Source)

D/A

M3, M4, M5

NI (destination) | NI (Source) | DES | DCD | DCA

ch1 ch2

PA

## FIG.8

champ d'étiquette | champ d'information

BPA, BS, ch1, ch2, ch3, ch4

DES² | NCV | DCD² | DCA² | octet d'information

D/A

octet d'information | octet d'information

PD

FIG. 4

## FIG.5

| St0 | St1 | St2 | BS | CA0$_a$ | CA1$_a$ | CA2$_a$ |
|---|---|---|---|---|---|---|
| 1 | 0 | 0 | 0 | 0 | 1 | 0 |
|  |  |  | 1 | 0 | 0 | 1 |
| 0 | 1 | 0 | 0 | 1 | 1 | 0 |
|  |  |  | 1 | erreur 0 | 0 | 0 |
| 0 | 0 | 1 | 0 | erreur 0 | 0 | 0 |
|  |  |  | 1 | 1 | 0 | 1 |

## FIG.10

AC = "0"

| St0 | St1 | St2 | $\overline{D}$/A | BS | CA0$_a$ | CA1$_a$ | CA2$_a$ |
|---|---|---|---|---|---|---|---|
| 1 | 0 | 0 | 0 | 0 | 0 | 1 | 0 |
|  |  |  | 0 | 1 | 0 | 0 | 1 |
|  |  |  | 1 | 0 | erreur 0 | 0 | 0 |
|  |  |  | 1 | 1 | erreur 0 | 0 | 0 |
| 0 | 1 | 0 | 0 | 0 | 0 | 1 | 0 |
|  |  |  | 0 | 1 | erreur 0 | 0 | 0 |
|  |  |  | 1 | 0 | 1 | 1 | 0 |
|  |  |  | 1 | 1 | erreur 0 | 0 | 0 |
| 0 | 0 | 1 | 0 | 0 | erreur 0 | 0 | 0 |
|  |  |  | 0 | 1 | 0 | 0 | 1 |
|  |  |  | 1 | 0 | erreur 0 | 0 | 0 |
|  |  |  | 1 | 1 | 1 | 0 | 1 |

## FIG.11

AC = "1"

| St0 | St1 | St2 | $\overline{D}$/A | BS | CA0$_a$ | CA1$_a$ | CA2$_a$ |
|---|---|---|---|---|---|---|---|
| 1 | 0 | 0 | 0 | 0 | erreur 0 | 0 | 0 |
|  |  |  | 0 | 1 | erreur 0 | 0 | 0 |
|  |  |  | 1 | 0 | 0 | 1 | 0 |
|  |  |  | 1 | 1 | 0 | 0 | 1 |
| 0 | 1 | 0 | 0 | 0 | 1 | 1 | 0 |
|  |  |  | 0 | 1 | erreur 0 | 0 | 0 |
|  |  |  | 1 | 0 | 0 | 1 | 0 |
|  |  |  | 1 | 1 | erreur 0 | 0 | 0 |
| 0 | 0 | 1 | 0 | 0 | erreur 0 | 0 | 0 |
|  |  |  | 0 | 1 | 1 | 0 | 1 |
|  |  |  | 1 | 0 | erreur 0 | 0 | 0 |
|  |  |  | 1 | 1 | 0 | 0 | 1 |

EP 0 346 164 B1

# FIG. 6

vers le réseau public

INTERFACE D'ACCES AU RESEAU PUBLIC  $2_1$

INTERFACE D'ACCES AU RESEAU PUBLIC  $2_2$

Mr

Mr

A0

A15

Mr

Mr

Mr

Mr

A1

Mr

Mr

CT1

CT2

Mr

Mr

Aj

N124

N125

N126

N1

N127

N0

Mr

Mr

TERMINAL

TERMINAL

FIG.9

FIG.12